(19) Europäisches Patentamt
European Patent Office
Office européen des brevets

(11) **EP 4 772 543 A1**

(12) **EUROPEAN PATENT APPLICATION**
published in accordance with Art. 153(4) EPC

(43) Date of publication:
08.07.2026 Bulletin 2026/28

(21) Application number: 24859977.1

(22) Date of filing: 30.08.2024

(51) International Patent Classification (IPC):
$C08F\ 8/04\ ^{(2006.01)}$  $C08K\ 3/08\ ^{(2006.01)}$
$C08K\ 5/13\ ^{(2006.01)}$  $C08L\ 15/00\ ^{(2006.01)}$
$H01M\ 4/62\ ^{(2006.01)}$  $H01M\ 4/139\ ^{(2010.01)}$

(52) Cooperative Patent Classification (CPC):
C08F 8/04; C08K 3/08; C08K 5/13; C08L 15/00;
H01M 4/139; H01M 4/62; Y02E 60/10

(86) International application number:
PCT/JP2024/031278

(87) International publication number:
WO 2025/047952 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.08.2023 JP 2023140182

(71) Applicant: Zeon Corporation
Tokyo 100-8246 (JP)

(72) Inventors:
• NOMOTO, Hirofumi
  Tokyo 100-8246 (JP)
• TAKAHASHI, Naoki
  Tokyo 100-8246 (JP)
• NAKAI, Akito
  Tokyo 100-8246 (JP)
• KIUCHI, Takashi
  Saku-shi, Nagano 385-0051 (JP)

(74) Representative: Maiwald GmbH
Elisenhof
Elisenstraße 3
80335 München (DE)

(54) **HYDROGENATED NITRILE RUBBER**

(57) The present invention provides a hydrogenated nitrile rubber that has excellent dispersibility and stability in a conductive material dispersion when manufacturing electrodes for electrochemical elements, excellent peel strength in the electrode and excellent crack suppression of the active material in the electrode after cycle testing, and excellent output characteristics of the electrochemical element. The hydrogenated nitrile rubber of the present invention contains a nitrile group-containing monomer unit and a conjugated diene monomer unit and/or an alkylene structural unit, has a weight average molecular weight (Mw) in the range of 1,000 to 1,000,000 and an iodine value of 100 mg/100 mg or less, contains a phenol-based antiaging agent, has a calcium (Ca) content of 1 to 2500 ppm, a ruthenium (Ru) content of 0.5 to 50 ppm, a palladium (Pd) content of 200 ppm or less, a magnesium (Mg) content of 50 ppm or less, and a sodium (Na) content of 300 ppm or less.

EP 4 772 543 A1

**Description**

[Technical field]

The present invention relates to hydrogenated nitrile rubber and its manufacturing method, a bale formed by molding hydrogenated nitrile rubber, a positive electrode material using hydrogenated nitrile rubber, a positive electrode binder formed by dispersing or dissolving hydrogenated nitrile rubber in a solvent, a positive electrode containing hydrogenated nitrile rubber, and a manufacturing method thereof.

[Background technology]

Electrochemical elements such as lithium-ion secondary batteries, lithium-ion capacitors, and electric double layer capacitors are small, lightweight, and has high energy density and a characteristic which can be repeatedly charged and discharged, so that such electrochemical elements are used in a wide range of applications. For this reason, in recent years, improvements to battery components such as electrodes have been considered to further improve the high performance of electrochemical elements.

Here, the electrodes used in electrochemical elements usually include a current collector and an electrode mixture layer formed on the current collector. This electrode mixture layer is formed, for example, by applying a slurry containing an electrode active material, a conductive material, and a binder to the current collector and drying the applied slurry.

Therefore, in recent years, attempts have been made to improve the binder used to form the electrode mixture layer to achieve further improvements in the performance of electrochemical elements. For example, technology using a polymer containing a nitrile group-containing monomer unit as a binder is being considered.

For example, Patent document 1 (JP 2018-160421 A) discloses a binder composition that contains a polymer containing a conjugated diene monomer unit and/or an alkylene structural unit and a nitrile group-containing monomer unit, and an organic solvent, and has a solution turbidity of 1 to 80 at a solid concentration of 10 mass%, and has an excellent balance between peel strength and secondary battery output characteristics. Specifically, a nitrile rubber latex obtained by emulsion polymerization of acrylonitrile and 1,3-butadiene is added to a 1 mass% aqueous solution of calcium chloride to coagulate, and after washing with water and filtering, the coagulated product is dried in a vacuum to obtain a nitrile rubber. The obtained nitrile rubber is subjected to metathesis with a ruthenium-based Grubbs catalyst and ethylene as a co-olefin, and then hydrogenated with a rhodium-based Wilkinson catalyst with an iodine value of 5 mg/100 mg as an end point. Next, 0.2 parts of activated carbon having an average diameter of 15 μm is added and the mixture is stirred for 30 minutes, after which steam is introduced to separate and dry the precipitate, and a hydrogenated polymer having a calcium ion concentration of 1000 ppm and an iodine value of 5 mg/100 mg is obtained. Then, N-methylpyrrolidone (NMP) is added and water is evaporated under reduced pressure to obtain an NMP solution of hydrogenated polymer with a solution turbidity of 20. An electrode is produced using a binder composition consisting of 1.6 parts of polyvinylidene fluoride (solution viscosity of 5 kPa·s) and 0.4 parts of hydrogenated polymer as the binder composition. However, further improvements in the stability and dispersibility of the conductive material dispersion are desired for the binder composition obtained here.

Patent document 2 (JP 6911985 B) discloses an electrochemical element having excellent rate characteristics and high-temperature storage stability, which includes a polymer containing α,β-ethylenically unsaturated nitrile monomer units and specific alkylene structural units, and which has a volume average particle diameter D of 50 to 800 nm when dynamic light scattering measurement is performed, and at least one peak detected in the range of 5 μm to 30 μm, and a conductive carbon material. Specifically, acrylonitrile and 1,3-butadiene are copolymerized, dibutylhydroxytoluene (BHT) is added as an antiaging agent, and then a 25 mass% aqueous solution of calcium chloride is added in an amount of 3 parts per 100 parts of the polymer to coagulate it, and 50 times the amount of ion-exchanged water is passed through the polymer to wash it, and then a hydrogenation reaction is performed using a palladium catalyst, and the palladium catalyst is filtered off, and polymers with iodine values of 5 mg/100 mg and 55 mg/100 mg are obtained. However, these polymers have a problem with electrode active material cracking after cycle testing of the electrochemical element produced.

On the other hand, Patent document 3 (JP 2018-145434 A) discloses hydrogenated nitrile rubber containing a substituted phenol useful for sealing materials, hose materials, transmission hoses, etc. in the automotive field. Specifically, 4-methyl-2,6-tert-butylphenol (BHT) is added to a polymerization liquid obtained by emulsion polymerization of acrylonitrile and 1,3-butadiene, and the mixture is coagulated with an aqueous sodium chloride solution or an aqueous magnesium chloride solution adjusted with calcium ion-containing tap water. The mixture is then washed with calcium ion-containing tap water to obtain NBR with a calcium content of 285 to 595 ppm. Next, the mixture is hydrogenated to a hydrogenation level of 99.4±0.2% in a chlorobenzene solution using a rhodium-based catalyst, and the polymer liquid is diluted to remove the rhodium. After that, a carboxyl group-containing water-soluble polymer, a 2% aqueous calcium chloride solution (0.15 parts by mass based on 100 parts by mass of hydrogenated nitrile rubber), and a dilute aqueous sodium hydroxide solution are continuously measured and added, and the mixture is coagulated to obtain hydrogenated nitrile rubber. However, even when the hydrogenated nitrile rubber obtained here was used to manufacture electrodes, the peel characteristics of the electrodes were poor, the output characteristics of the manufactured electrochemical element were poor, and furthermore, cracks occurred in the electrode active material after cycle testing, making it unsuitable as a binder for electrode manufacture.

Patent document 4 (WO 2007/049651 A) discloses a carboxyl group-containing nitrile rubber which gives a crosslinked product with small compression set and dynamic heat generation and has excellent processability, has an $\alpha,\beta$-ethylenically unsaturated nitrile monomer unit content of 10 to 60% by weight, an iodine value of 120 or less, and a total amount of magnesium, calcium, and aluminum of 2000 ppm or less. A specific example of carboxyl group-containing nitrile rubber is obtained as follows: An aqueous magnesium sulfate solution is added to a latex of nitrile group-containing saturated copolymer rubber obtained by emulsion polymerization of acrylonitrile, mono-n-butyl fumarate, and butadiene, followed by hydrogenation with a palladium catalyst. After coagulating the rubber, the rubber is then filtered and washed three times, centrifuged to remove the aqueous magnesium sulfate solution contained in the rubber, and vacuum dried at 60°C for 12 hours to obtain a nitrile rubber having a magnesium content of 1 to 2 ppm, a calcium content of 1 ppm, and an aluminum content of 1 ppm. However, the nitrile rubber obtained here is desired to be further improved in terms of the stability of the conductive material dispersion, the electrode peel strength when used in an electrochemical element, and cracking of the active material layer after cycle testing.

Patent document 5 (JP 2009-179686 A) discloses a method of recovering carboxyl group-containing nitrile rubber from the latex of carboxyl group-containing nitrile rubber, in which an extruder is used in which a screw is arranged inside a barrel in which at least a coagulation zone is formed and is freely rotatable. Specifically, a latex of carboxyl group-containing nitrile rubber obtained by emulsion polymerization according to the above Patent document 4 (acrylonitrile monomer unit: 34 mass%, butadiene monomer unit: 59 mass%, n-monobutyl maleate monomer unit: 7 mass%, iodine value: 10, solid concentration: 10.8 mass%) and an aqueous magnesium sulfate solution (coagulant concentration: 5 mass%) as a coagulation liquid are prepared, and coagulation, drainage, washing, dehydration and drying are performed using a screw-type extruder equipped with a coagulation zone, a drainage zone, a washing/dehydration zone and a drying zone, and a sheet-like carboxyl group-containing nitrile rubber with a Mooney viscosity of 40 is recovered. However, there is a demand for a polymer that is suitable as a binder for a positive electrode, can improve the stability of a conductive material dispersion and, when used in an electrochemical element, improve the electrode peel strength and the cracking suppression of the active material layer after a cycle test.

[Prior art documents]

[Patent documents]

[Patent document 1] JP 2018-160421 A
[Patent document 2] JP 6911985 B
[Patent document 3] JP 2018-145434 A
[Patent document 4] WO 2007/049651 A
[Patent document 5] JP 2009-179686 A

[Summary of the invention]

[Problem to be solved by the invention]

The present invention was made in consideration of the above situation. The objective of the present invention is to provide a hydrogenated nitrile rubber that has excellent dispersibility and stability in a conductive material dispersion when manufacturing electrodes for electrochemical elements, excellent peel strength at an electrode, excellent crack suppression in an active material in an electrode after a cycle test, and excellent output characteristics of an electrochemical element, and a manufacturing method thereof; a bale made of the hydrogenated nitrile rubber; a positive electrode material using the hydrogenated nitrile rubber; a positive electrode binder made by dispersing or dissolving the hydrogenated nitrile rubber or hydrogenated nitrile rubber bale in a solvent; and a positive electrode containing the hydrogenated nitrile rubber and a manufacturing method thereof.

[Means for solving the problem]

As a result of intensive research in consideration of the above problem, the present inventors have found that hydrogenated nitrile rubber, which contains a nitrile group-containing monomer unit, a conjugated diene monomer unit and/or an alkylene structural unit, has a specific weight-average molecular weight, an iodine value, and a specific antiaging agent, has specific ranges of Ca and Ru, and has limited Pd, Mg, and Na contents, has excellent stability in the conductive material dispersion during the manufacture of electrochemical elements, suppresses deterioration of the peel strength of the manufactured electrodes, and cracks in the active material after cycle testing, and improves the output characteristics of the electrochemical elements.

The inventors have also found that hydrogenated nitrile rubber obtained by emulsion polymerizing a nitrile group-containing monomer and a conjugated diene monomer and coagulating the polymer with calcium chloride can improve the viscosity characteristics (dispersibility) of the conductive material dispersion when it is prepared, as well as improving the peel strength of the resulting electrode and improving the effect of suppressing cracking of the electrode active material after cycle testing of an electrochemical element.

The inventors have further found that hydrogenated nitrile rubber obtained by emulsion polymerizing a nitrile group-containing monomer and a conjugated diene monomer, followed by coagulation with calcium chloride of the emulsion polymerization liquid to which a phenol-based antiaging agent has been added, can significantly improve the viscosity characteristics and stability of the conductive material dispersion when it is prepared, as well as improving the peel strength of the resulting electrode, and improving the output characteristics of an electrochemical element and the effect of suppressing cracking of the electrode active material after cycle testing. In particular, it was found that adding a phenol-based antiaging agent to the latex of nitrile rubber before hydrogenation, rather than to the latex of hydrogenated nitrile rubber, allows for uniform dispersion in the polymer, reduces the amount of emulsifier used, improves the stability of the conductive material dispersion, and prevents the cycle characteristics of lithium ion secondary batteries and cracking of the active material layer after cycle testing.

The inventors have also found that hydrogenated nitrile rubber containing a specific antiaging agent can significantly improve the stability of the conductive material dispersion. The inventors have also found that increasing the bulk density of the hydrogenated nitrile rubber and reducing the amount of air contained therein as much as possible can further improve the stability of the conductive material dispersion, prevent cracking of the electrode active material, and improve various characteristics of electrochemical elements. The inventors surmise that the stability of the conductive material dispersion deteriorates due to the reaction and crosslinking with the active points on the conductive material surface caused by the oxygen radicals generated in the hydrogenated nitrile rubber, and that the absence of a phenol-based antiaging agent or air in the interior works well against the generation and reaction of these oxygen radicals. The inventors have also found that hydrogenated nitrile rubber and hydrogenated nitrile rubber bales with high bulk density can be easily obtained by melt-kneading and extruding the mixture into a sheet under reduced pressure using a screw-type extruder, and then laminating the extruded hydrogenated nitrile rubber sheets.

The inventors have also found that by further limiting the amount of calcium (Ca) in the hydrogenated nitrile rubber and specifying the amount of chlorine (Cl) and the mass ratio (Ca/Cl) of the calcium (Ca) content to the chlorine (Cl) content, it is possible to further improve the viscosity characteristics (dispersibility) of the conductive material dispersion when it is prepared, and to suppress cracking of the electrode active material after cycle testing in the resulting electrode, thereby significantly improving the cycle characteristics of the electrochemical element.

The inventors have also found that by specifying the ratio (Mw/Mn) of the weight average molecular weight (Mw) to the number average molecular weight (Mn) of the hydrogenated nitrile rubber and the ratio (Mz/Mw) of the Z average molecular weight (Mz) to the weight average molecular weight (Mw) of the hydrogenated nitrile rubber, it is possible to prevent a decrease in characteristics such as peel strength, even if the weight average molecular weight (Mw) of the hydrogenated nitrile rubber is reduced to improve the cycle characteristics.

The inventors have also discovered that when the hydrogenated nitrile rubber contains a specific ratio or more of nitrile group-containing monomers and conjugated diene monomer-derived structural units, the dispersion stability of the conductive material dispersion is increased, and the output characteristics and cycle characteristics of the electrochemical element are improved.

The inventors have found that hydrogenated nitrile rubber, which is excellent for producing electrodes for electrochemical elements, can be easily produced by emulsion polymerizing monomer components containing a nitrile group-containing monomer and a conjugated diene monomer, adding a specific antiaging agent to the resulting polymer, and then coagulating the polymer with calcium chloride, and then carrying out a hydrogenation reaction or a metathesis reaction on the polymer using a ruthenium catalyst.

The inventors have further found that the effects of the present invention can be maintained by baling and retaining the hydrogenated nitrile rubber of the present invention, and that dispersing or dissolving the hydrogenated nitrile rubber of the present invention in N-methylpyrrolidone makes a binder solution suitable for producing positive electrodes for electrochemical elements.

The inventors have completed the present invention based on these findings.

Thus, according to the present invention, there is provided a hydrogenated nitrile rubber which contains nitrile group-containing monomer units and conjugated diene monomer units and/or alkylene structural units, has a weight average molecular weight (Mw) in the range of 1,000 to 1,000,000 and an iodine value of 100 mg/100 mg or less, contains a phenol-based antiaging agent, and has a calcium (Ca) content of 1 to 2500 ppm, a ruthenium (Ru) content of 0.5 to 50 ppm, a palladium (Pd) content of 200 ppm or less, a magnesium (Mg) content of 50 ppm or less, and a sodium (Na) content of 300 ppm or less.

In the hydrogenated nitrile rubber of the present invention, the calcium (Ca) content is preferably in the range of 10 to 1500 ppm.

In the hydrogenated nitrile rubber of the present invention, the content of the phenol-based antiaging agent is preferably in the range of 0.001 to 2 mass%.

In the hydrogenated nitrile rubber of the present invention, the bulk density is preferably 0.8 g/cm$^3$ or more.

Furthermore, in the hydrogenated nitrile rubber, the total ratio of the nitrile group-containing monomer units and the conjugated diene monomer units and/or alkylene structural units in the hydrogenated nitrile rubber is preferably 95 mass% or more.

Furthermore, in the hydrogenated nitrile rubber, the chlorine (Cl) content is preferably 3000 ppm or less, and the mass ratio (Ca/Cl) of the calcium (Ca) content to the chlorine (Cl) content is preferably in the range of 0.01 to 10.

In addition, in the hydrogenated nitrile rubber, it is preferable that the ratio (Mw/Mn) of the weight average molecular weight (Mw) to the number average molecular weight (Mn) of the hydrogenated nitrile rubber is in the range of 1.2 to 5, and the ratio (Mz/Mw) of the Z average molecular weight (Mz) to the weight average molecular weight (Mw) is in the range of 1.5 to 5.

Furthermore, in the hydrogenated nitrile rubber, it is preferable that the weight average molecular weight (NMP-Mw) measured using NMP as a solvent and the weight average molecular weight (DMF-Mw) measured using DMF as a solvent satisfy the relationship NMP-Mw≧DMF-Mw.

In the hydrogenated nitrile rubber of the present invention, it is preferable that the hydrogenated nitrile rubber is obtained by emulsion polymerizing a nitrile group-containing monomer and a conjugated diene monomer, coagulating the resulting polymer with calcium chloride, and hydrogenating the polymer.

The hydrogenated nitrile rubber of the present invention is preferably one obtained by emulsion polymerizing a nitrile group-containing monomer and a conjugated diene monomer, adding a phenol-based antiaging agent to the resulting polymer, and then coagulating the polymer with calcium chloride, and hydrogenating the polymer.

The present invention also provides a method for producing the above hydrogenated nitrile rubber, which comprises emulsion polymerizing a monomer component containing a nitrile group-containing monomer and a conjugated diene monomer, adding a phenol-based antiaging agent to the resulting polymer, and then coagulating the polymer with calcium chloride, and hydrogenating the polymer by any of the following methods (1) to (3).

(1) A hydrogenation reaction is carried out using a ruthenium catalyst.
(2) A metathesis reaction with a co-olefin is carried out using a ruthenium catalyst, followed by a hydrogenation reaction.
(3) A metathesis reaction with a co-olefin is carried out using a ruthenium catalyst, followed by a hydrogenation reaction using a hydrogenation catalyst other than the ruthenium catalyst.

In the method for producing the hydrogenated nitrile rubber of the present invention, it is preferable that the hydrogenated nitrile rubber produced after the hydrogenation reaction is dried using a screw-type extruder.

In the method for producing the hydrogenated nitrile rubber of the present invention, it is preferable that the screw-type extruder is equipped with a drying barrel under reduced pressure.

According to the present invention, there is also provided a hydrogenated nitrile rubber bale obtained by baling the hydrogenated nitrile rubber.

In the hydrogenated nitrile rubber bale of the present invention, it is preferable that the bulk density is 0.8 g/cm$^3$ or more.

In the hydrogenated nitrile rubber bale of the present invention, it is preferable that the bale formation is carried out by stacking sheet-shaped hydrogenated nitrile rubber.

According to the present invention, a positive electrode material is also provided that uses the hydrogenated nitrile rubber or the hydrogenated nitrile rubber bale.

According to the present invention, there is also provided a positive electrode binder obtained by dispersing or dissolving the hydrogenated nitrile rubber in N-methylpyrrolidone (NMP).

The present invention provides a positive electrode binder obtained by dispersing or dissolving the hydrogenated nitrile rubber bale in N-methylpyrrolidone (NMP).

The present invention provides a positive electrode comprising a current collector and a positive electrode mixture layer containing a conductive material, a positive electrode active material, and the positive electrode material.

The present invention further provides a method for producing a positive electrode, comprising the steps of mixing the positive electrode binder solution with a conductive material, and then mixing the resultant with a positive electrode active material to obtain a positive electrode mixture layer slurry, applying the slurry to a current collector, and drying the slurry.

[Effects of the Invention]

According to the present invention, there are provided a hydrogenated nitrile rubber useful as a positive electrode material, which has excellent viscosity characteristics and stability of the conductive material dispersion, enhances the peel strength of the produced electrode and the effect of suppressing cracking of the active material after cycle testing, and can improve the output characteristics of an electrochemical element, and a method for producing the same; a hydrogenated nitrile rubber bale made of the hydrogenated nitrile rubber; a positive electrode material using the hydrogenated nitrile rubber or hydrogenated nitrile rubber bale; a positive electrode binder made by dispersing or dissolving the hydrogenated nitrile rubber or hydrogenated nitrile rubber bale in a solvent; and a positive electrode containing the hydrogenated nitrile rubber and a method for producing the same.

[Embodiments for carrying out the invention]

The following provides a detailed description about the embodiments of the present invention.
The hydrogenated nitrile rubber of the present invention contains a nitrile group-containing monomer unit, a conjugated diene monomer unit and/or an alkylene structural unit, has a weight average molecular weight (Mw) in the range of 1,000 to 1,000,000, has an iodine value of 100 mg/100 mg or less, contains a phenol-based antiaging agent, has a Ca content of 1 to 2500 ppm, a Ru content of 0.5 to 50 ppm, a Pd content of 200 ppm or less, a Mg content of 50 ppm or less, and a Na content of 300 ppm or less.

<Monomer components>

The hydrogenated nitrile rubber of the present invention contains a nitrile group-containing monomer unit, a conjugated diene monomer unit and/or an alkylene structural unit. Such hydrogenated nitrile rubber is a component that can function as a binder that holds the electrode active material and the like from the current collector without detaching it in the electrode mixture layer formed in the electrochemical element. Furthermore, such hydrogenated nitrile rubber can also function as a dispersant that can disperse the conductive material in a conductive material dispersion containing a conductive material.
Specifically, the hydrogenated nitrile rubber can be a hydrogenated polymer obtained by hydrogenating a polymer containing a conjugated diene monomer unit and a nitrile group-containing monomer unit. Here, when the hydrogenation of the polymer containing the conjugated diene monomer unit and the nitrile group-containing monomer unit is completely performed, it becomes a polymer containing an alkylene structural unit and a nitrile group-containing monomer unit, and when the hydrogenation is partially performed, it becomes a polymer containing a conjugated diene monomer unit, an alkylene structural unit, and a nitrile group-containing monomer unit.

(Nitrile group-containing monomer unit)

As a nitrile group-containing monomer that can form a nitrile group-containing monomer unit, an $\alpha,\beta$-ethylenically unsaturated nitrile monomer can be mentioned. Specifically, the $\alpha,\beta$-ethylenically unsaturated nitrile monomer is not particularly limited as long as it is an $\alpha,\beta$-ethylenically unsaturated compound having a nitrile group, but examples thereof include acrylonitrile; $\alpha$-halogenoacrylonitrile such as $\alpha$-chloroacrylonitrile and $\alpha$-bromoacrylonitrile; $\alpha$-alkylacrylonitrile such as methacrylonitrile and $\alpha$-ethylacrylonitrile; and the like. Among these, acrylonitrile is preferred. The nitrile group-containing monomer may be used alone or in any combination of two or more kinds at any ratio.
The content ratio of the nitrile group-containing monomer unit in the hydrogenated nitrile rubber is preferably 10 mass% or more, more preferably 15 mass% or more, even more preferably 20 mass% or more, and preferably 50 mass% or less, more preferably 45 mass% or less, and even more preferably 40 mass% or less, based on the total repeating units in the hydrogenated nitrile rubber being 100 mass%. If the content ratio of the nitrile group-containing monomer unit is within the above-mentioned range, the dispersion stability of the conductive material dispersion can be increased, and the peel strength of the obtained electrode can be further improved.

(Conjugated diene monomer unit)

Here, examples of conjugated diene monomers that can form conjugated diene monomer units include conjugated diene compounds having 4 or more carbon atoms, such as 1,3-butadiene, isoprene, 2,3-dimethyl-1,3-butadiene, 2-ethyl-1,3-butadiene, and 1,3-pentadiene. Among them, isoprene and 1,3-butadiene are preferred, and 1,3-butadiene is particularly preferred.

(Alkylene structural unit)

Here, the alkylene structural unit is a repeating unit composed only of an alkylene structure represented by the general formula: $-C_nH_{2n}-$ [where n is an integer of 2 or more]. The alkylene structural unit may be linear or branched, but from the viewpoint of improving the rate characteristics of the electrochemical element while reducing the resistance of the electrode, it is preferable that the alkylene structural unit is linear, i.e., a linear alkylene structural unit. It is also preferable that the number of carbon atoms in the alkylene structural unit is 4 or more (i.e., n in the above general formula is an integer of 4 or more).

The alkylene structural unit may be linear or branched, but it is preferable that the alkylene structural unit is linear, i.e., a linear alkylene structural unit. It is also preferable that the number of carbon atoms in the alkylene structural unit is 4 or more (i.e., n in the above general formula is an integer of 4 or more).

The method of introducing an alkylene structural unit into a polymer is not particularly limited, but may be, for example, the following methods (1) or (2) to be raised:

(1) A method of preparing a polymer from a monomer composition containing a conjugated diene monomer, and then hydrogenating the polymer to convert the conjugated diene monomer unit into an alkylene structural unit;
(2) A method of preparing a polymer from a monomer composition containing a 1-olefin monomer. Among them, method (1) is preferred because it is easy to produce the polymer.

In other words, the alkylene structural unit is preferably a structural unit obtained by hydrogenating a conjugated diene monomer unit (conjugated diene hydride unit), and more preferably a structural unit obtained by hydrogenating a 1,3-butadiene unit (1,3-butadiene hydride unit).

Furthermore, examples of the 1-olefin monomer include ethylene, propylene, 1-butene, and 1-hexene.

These conjugated diene monomers and 1-olefin monomers can be used alone or in combination of two or more kinds.

The total content of the conjugated diene monomer units and the alkylene structural units in the hydrogenated nitrile rubber is preferably 50 mass% or more, more preferably 55 mass% or more, particularly preferably 60 mass% or more, preferably 90 mass% or less, more preferably 85 mass% or less, particularly preferably 80 mass% or less, when the total repeating units (total of structural units and monomer units) in the hydrogenated nitrile rubber is 100 mass%. If the total content of the conjugated diene monomer units and the alkylene structural units in the hydrogenated nitrile rubber is within the above range, the dispersion stability of the conductive material dispersion and the cycle characteristics of the electrochemical element can be improved.

When the hydrogenated nitrile rubber has only either one of the content ratios of the alkylene structural units and the conjugated diene monomer units, it is preferable that the ratio satisfies the above range.

(Nitrile group-containing monomer units, conjugated diene monomer units, alkylene structural units)

The total ratio of the nitrile group-containing monomer units and the conjugated diene monomer units and/or alkylene structural units in the hydrogenated nitrile rubber of the present invention is not particularly limited, but when it is usually 80 mass% or more, preferably 90 mass% or more, more preferably 95 mass% or more, even more preferably 97 mass% or more, and most preferably 99 mass% or more, the dispersion stability of the conductive material dispersion and the cycle characteristics of the electrochemical element can be improved.

(Other repeating units)

Other repeating units include, but are not limited to, aromatic vinyl monomer units, acidic group-containing monomer units, and (meth)acrylic acid ester monomer units. The hydrogenated nitrile rubber may contain one type of other repeating unit or may contain two or more types of other repeating units.

Further in the present invention, "(meth)acrylic" means acrylic and/or methacrylic.

Aromatic vinyl monomers capable of forming aromatic vinyl monomer units include, for example, styrene, $\alpha$-methylstyrene, p-t-butylstyrene, butoxystyrene, vinyltoluene, chlorostyrene, and vinylnaphthalene. The aromatic vinyl monomer may be used alone or in combination of two or more kinds in any ratio. Among them, styrene is preferred.

Acidic group-containing monomers capable of forming acidic group-containing monomer units include carboxylic acid group-containing monomers, sulfonic acid group-containing monomers, and phosphoric acid group-containing monomers. The acidic group-containing monomers may be used alone or in combination of two or more in any ratio.

Carboxylic acid group-containing monomers include monocarboxylic acids and their derivatives, dicarboxylic acids and their acid anhydrides, their derivatives, and the like.

Monocarboxylic acids include acrylic acid, methacrylic acid, crotonic acid, and the like.

The monocarboxylic acid derivatives include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and the like.

The dicarboxylic acids include maleic acid, fumaric acid, and itaconic acid.

The dicarboxylic acid derivatives include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleate.

The dicarboxylic acid anhydrides include maleic anhydride, acrylic anhydride, methylmaleic anhydride, and dimethylmaleic anhydride.

As the carboxylic acid group-containing monomer, an acid anhydride that generates a carboxylic acid group by hydrolysis can also be used. Among them, acrylic acid and methacrylic acid are preferred as the carboxylic acid group-containing monomer.

As the sulfonic acid group-containing monomer, vinyl sulfonic acid, methyl vinyl sulfonic acid, (meth)allyl sulfonic acid, styrene sulfonic acid, (meth)acrylic acid-2-ethyl sulfonate, 2-acrylamido-2-methylpropanesulfonic acid, 3-allyloxy-2-hydroxypropanesulfonic acid, and the like can be raised.

Further in the present invention, "(meth)allyl" means allyl and/or methallyl.

As the phosphate group-containing monomer, for example, 2-(meth)acryloyloxyethyl phosphate, methyl-2-(meth)acryloyloxyethyl phosphate, ethyl-(meth)acryloyloxyethyl phosphate, etc. can be raised.

Further in the present invention, "(meth)acryloyl" means acryloyl and/or methacryloyl.

Examples of (meth)acrylic acid ester monomers that can form (meth)acrylic acid ester monomer units include such as acrylic acid alkylates methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, and the like. and alkyl methacrylates such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. The (meth)acrylic acid ester monomers may be used alone or in combination of two or more kinds in any ratio.

The content ratio of other repeating units in the hydrogenated nitrile rubber is preferably 0 mass% or more and 30 mass% or less, more preferably 0 mass% or more and 20 mass% or less, even more preferably 0 mass% or more and 10 mass% or less, particularly preferably 0 mass% or more and 5 mass% or less, and most preferably 0 mass% or more and 3 mass% or less, with the total repeating units in the hydrogenated nitrile rubber being taken as 100 mass%.

<Antiaging agent>

The hydrogenated nitrile rubber of the present invention is characterized by containing a phenol-based antiaging agent.

There are no particular limitations on the phenol-based antiaging agent, so long as it is one that is commonly used, but the melting point of the phenol-based antiaging agent is usually 150°C or less, preferably 140°C or less, more preferably 130°C or less, even more preferably 100°C or less, and most preferably 90°C or less, and the molecular weight of the phenol-based antiaging agent is usually in the range of 100 to 1000, preferably 130 to 750, more preferably 150 to 500, even more preferably 170 to 450, and most preferably 200 to 300.

Among the phenol-based antiaging agents, hindered phenol-based antiaging agents are particularly suitable, as they provide a high degree of stability to the conductive material dispersion. In the present invention, the hindered phenol-based antiaging agent refers to a phenol-based antiaging agent having bulky substituents on both sides of the phenol group, and the bulky substituents on both sides are isobutyl groups and t-butyl groups, and preferably t-butyl groups.

Hindered phenol-based antiaging agents include, for example, 2,6-di-t-butylphenol, 2,6-di-t-butyl-4-methylphenol, 2,6-di-t-pentenyl-4-methylphenol, 2,2-methylenebis(4-methyl-6-t-butylphenol), 2,4-bis(octylthiomethyl)-6-methylphenol, 2,6-di-t-butyl-$\alpha$-dimethylamino-p-cresol, butyl 3-(4-hydroxy-3,5-di-t-butylphenyl)propionate, hexyl 3-(4-hydroxy-3,5-di-t-butylphenyl)propionate, octyl 3-(4-hydroxy-3,5-di-t-butylphenyl)propionate, decyl 3-(4-hydroxy-3,5-di-t-butylphenyl)propionate, dodecyl 3-(4-hydroxy-3,5-di-t-butylphenyl)propionate, octadecyl 3-(4-hydroxy-3,5-di-t-butylphenyl)propionate, heptyl 3-(4-hydroxy-3,5-diisopropylphenyl)propionate, octyl 3-(4-hydroxy-3,5-diisopropylphenyl)propionate, dodecyl 3-(4-hydroxy-3,5-diisopropylphenyl)propionate, octadecyl 3-(4-hydroxy-3,5-diisopropylphenyl)propionate, 4,4'-methylenebis(2,6-dibutylphenol), 2,6-di-t-butyl-4-(4,6-bis(octylthio)-1,3,5-triazin-2-ylamino)phenol and the like are preferred, with 2,6-dit-butyl-4-methylphenol (dibutylhydroxytoluene=BHT), 2,2-methylenebis(4-methyl-6-t-butylphenol), and 2,4-bis(octylthiomethyl)-6-methylphenolbeing the most preferred, and BHT being the most preferred.

Phenol-based antiaging agents other than the hindered phenol-based antiaging agents include, for example, styrenated phenols, butylated hydroxyanisole, mono-(or di-, or tri-)($\alpha$-methylbenzyl)phenol as styrenated phenols, 2,2'-methylene-bis(4-methyl-6-t-butylphenol), alkylated bisphenols, 2,4-bis[(octylthio)methyl]-6-methylphenol, 2,2'-thio-bis-(4-methyl-6-t-butylphenol), 4,4'-thiobis-(6-t-butyl-o-cresol), and the like, with styrenated phenol and 2,4-bis[(octylthio)methyl]-6-methylphenol being preferred.

These phenol-based antiaging agents can be used alone or in combination of two or more. The content of the phenol-based antiaging agent in the hydrogenated nitrile rubber is not particularly limited, but is usually in the range of 0.001 to 2 mass%, preferably 0.01 to 1 mass%, more preferably 0.05 to 0.5 mass%, even more preferably 0.1 to 0.5 mass%, and most preferably 0.1 to 0.3 mass%. If the content of the phenol-based antiaging agent in the hydrogenated nitrile rubber is too small, the stability of the conductive material dispersion is poor, and if it is too large, it affects the cycle characteristics of the electrochemical element, both of which are undesirable.

The hydrogenated nitrile rubber of the present invention can contain other antiaging agents other than the phenol-based antiaging agent to the extent that the object of the present invention is not impaired. As the other antiaging agent, for example, amine-based antiaging agents such as styrenated diphenylamine and bis(4-t-octylphenyl)amine are preferably used.

<Hydrogenated nitrile rubber>

The hydrogenated nitrile rubber of the present invention contains the repeating unit and the antiaging agent, has a specific weight average molecular weight (Mw) and iodine value, contains specific amounts of Ca and Ru, and limits the Pd content, Mg content, and Na content.

The weight average molecular weight (Mw) of the hydrogenated nitrile rubber of the present invention is in the range of 1,000 to 1,000,000, preferably 2,000 to 500,000, more preferably 4,000 to 400,000, even more preferably 5,000 to 250,000, and most preferably 20,000 to 250,000. If the weight average molecular weight (Mw) of the hydrogenated nitrile rubber is in this range, it is preferable because it can increase the dispersion stability of the conductive material dispersion and also increase the peel strength of the resulting electrode.

The ratio (Mw/Mn) of the weight average molecular weight (Mw) to the number average molecular weight (Mn) of the hydrogenated nitrile rubber of the present invention is not particularly limited, but is usually in the range of 1.2 to 5, preferably 1.5 to 4.5, more preferably 1.8 to 4.3, even more preferably 2.0 to 4.0, and most preferably 2.2 to 3.5, as measured in DMF solvent. When the Mw/Mn of the hydrogenated nitrile rubber is in this range, the conductive material dispersion has excellent dispersibility and stability, making it suitable.

The Z-average molecular weight (Mz) of the hydrogenated nitrile rubber of the present invention is not particularly limited, but when it is in the range of usually 10,000 to 3,000,000, preferably 20,000 to 2,000,000, more preferably 50,000 to 1,000,000, even more preferably 100,000 to 600,000, and most preferably 120,000 to 300,000, as measured in DMF solvent, it is suitable for achieving excellent dispersibility and stability of the conductive material dispersion and for increasing the peel strength of the electrode.

The ratio (Mz/Mw) of the Z-average molecular weight (Mz) to the weight-average molecular weight (Mw) of the hydrogenated nitrile rubber of the present invention is not particularly limited, but is usually 1.5 to 5, preferably 1.5 to 4.5, more preferably 1.5 to 4, even more preferably 1.5 to 3.8, and most preferably 1.5 to 3.5, as measured in DMF solvent. When the Mz/Mw of the hydrogenated nitrile rubber is in this range, the dispersibility and stability of the conductive material dispersion are excellent and the peel strength of the electrode can be increased, which is preferable.

In the hydrogenated nitrile rubber of the present invention, when the weight-average molecular weight (NMP-Mw) measured using N-methylpyrrolidone (NMP) as a solvent and the weight-average molecular weight (DMF-Mw) measured using dimethylformamide (DMF) as a solvent have the relationship NMP-Mw≧DMF-Mw, the dispersibility and stability of the conductive material dispersion using NMP as a solvent can be highly increased.

The ratio of the weight average molecular weight (NMP-Mw) of the hydrogenated nitrile rubber of the present invention measured using N-methylpyrrolidone (NMP) as a solvent to dimethylformamide (DMF) (NMP-Mw/DMF-Mw) is not particularly limited, but is usually 1 or more, preferably 1.01 or more, more preferably 1.02 or more, even more preferably 1.05 or more, and most preferably 1.1 or more, and the upper limit is not particularly limited, but is usually 3 or less, preferably 2.5 or less, more preferably 2.2 or less, even more preferably 2 or less, and most preferably 1.5 or less. When the NMP-Mw/DMF-Mw of the hydrogenated nitrile rubber is in this range, the dispersibility and stability of the conductive material dispersion using NMP as the solvent can be highly improved.

The iodine value of the hydrogenated nitrile rubber of the present invention is 100 mg/100 mg or less, preferably 80 mg/100 mg or less, more preferably 60 mg/100 mg or less, even more preferably 40 mg/100 mg or less, and most preferably 25 mg/100 mg or less, with the lower limit being 1 mg/100 mg or more, preferably 2 mg/100 mg or more, more preferably 5 mg/100 mg or more, even more preferably 7.5 mg/100 mg or more, and most preferably 10 mg/100 mg or more. When the iodine value of the hydrogenated nitrile rubber is in this range, the viscosity characteristics of the conductive material dispersion, the peel strength of the electrode, and the output characteristics and cycle characteristics of the electrochemical element are highly balanced, which is preferable.

The Ca content in the hydrogenated nitrile rubber of the present invention is in the range of 1 to 2500 ppm, preferably 5 to 1500 ppm, more preferably 50 to 800 ppm, and most preferably 100 to 500 ppm. The Ca content in the hydrogenated nitrile rubber is also usually 1 ppm or more, preferably 3 ppm or more, more preferably 5 ppm or more, or in the order of 10 ppm or more, 20 ppm or more, 30 ppm or more, 50 ppm or more, 70 ppm or more, 100 ppm or more, 150 ppm or more, 200 ppm or more, 250 ppm or more, and 300 ppm or more. The Ca content in the hydrogenated nitrile rubber is usually 2000 ppm or less, 1500 ppm or less, 1200 ppm or less, 1000 ppm or less, 800 ppm or less, 700 ppm or less, 600 ppm or less, and 500 ppm or less, in that order. When the Ca content in the hydrogenated nitrile rubber is in this range, cracking of the electrode active material in the resulting electrode can be effectively suppressed, and the peel strength of the electrode can be increased. In addition, when the Ca content in the hydrogenated nitrile rubber is in this range, when a conductive material dispersion is prepared, the viscosity characteristics (dispersibility) of the conductive material dispersion can be increased, and the cycle characteristics of the resulting electrochemical element and the effect of suppressing cracking of the electrode active material after cycle testing can be increased, which is preferable.

The Cl content in the hydrogenated nitrile rubber of the present invention is not particularly limited, but is usually 3000 ppm or less, preferably 2500 ppm or less, more preferably 2000 ppm or less, even more preferably 1500 ppm or less, and most preferably 1000 ppm or less. The lower limit of the Cl content in the hydrogenated nitrile rubber is not particularly limited, but is usually 0.5 ppm or more, preferably 1 ppm or more, preferably 2.5 ppm or more, or 5 ppm or more, 10 ppm or more, 20 ppm or more, 30 ppm or more, 40 ppm or more, 50 ppm or more, 70 ppm or more, and 100 ppm or more are preferred in this order. When the Cl content in the hydrogenated nitrile rubber is in this range, when a conductive material dispersion of the hydrogenated nitrile rubber is prepared, the viscosity characteristics of the conductive material dispersion can be increased, and the cycle characteristics of the resulting electrochemical element and cracking of the electrode active material after cycle testing can be suppressed, which is preferable.

The mass ratio (Ca/Cl) of the Ca content to the Cl content in the hydrogenated nitrile rubber of the present invention is not particularly limited, but is usually in the range of 0.01 to 10, preferably 0.1 to 5, more preferably 0.2 to 4, even more preferably 0.5 to 3, and most preferably 0.6 to 2.5. When the mass ratio of the Ca content to the Cl content in the hydrogenated nitrile rubber is in this range, it is possible to increase the viscosity characteristics of the conductive material dispersion when the conductive material dispersion is prepared, and it is preferable because it can increase the cycle characteristics of the obtained electrochemical element and suppress the cracking of the electrode active material after the cycle test.

The Ru content in the hydrogenated nitrile rubber of the present invention is preferably in the range of 0.5 to 50 ppm, preferably 1 to 25 ppm, more preferably 2 to 25 ppm, even more preferably 2 to 20 ppm, and most preferably 3 to 15 ppm, because it can suppress the cracking of the active material in the manufactured electrode.

The Pd content in the hydrogenated nitrile rubber of the present invention is 200 ppm or less, preferably 100 ppm or less, more preferably 50 ppm or less, even more preferably 10 ppm or less, and most preferably 5 ppm or less. When the Pd content in the hydrogenated nitrile rubber is within this range, cracking of the active material in the electrodes is suppressed, and the cycle characteristics of the electrochemical element are improved, which is preferable.

The Mg content in the hydrogenated nitrile rubber of the present invention is 50 ppm or less, preferably 30 ppm or less, more preferably 10 ppm or less, even more preferably 5 ppm or less, and most preferably 3 ppm or less. When the Mg content in the hydrogenated nitrile rubber is within this range, cracking of the active material in the electrodes is suppressed, and the cycle characteristics of the electrochemical element are improved, which is preferable.

The Na content in the hydrogenated nitrile rubber of the present invention is 300 ppm or less, preferably 250 ppm or less, more preferably 100 ppm or less, even more preferably 75 ppm or less, and most preferably 50 ppm or less. When the Na content in the hydrogenated nitrile rubber is within this range, cracking of the active material in the electrode is suppressed, and the cycle characteristics of the electrochemical element are improved, which is preferable.

The bulk density of the hydrogenated nitrile rubber of the present invention is not particularly limited, but is usually 0.6 g/cm$^3$ or more, preferably 0.7 g/cm$^3$ or more, more preferably 0.8 g/cm$^3$ or more, even more preferably 0.85 g/cm$^3$ or more, and most preferably 0.9 g/cm$^3$ or more. There is no particular upper limit to the bulk density of the hydrogenated nitrile rubber, but it is usually 1.2 g/cm$^3$ or less, preferably 1.15 g/cm$^3$ or less, more preferably 1.1 g/cm$^3$ or less, even more preferably 1.05 g/cm$^3$ or less, and most preferably 1 g/cm$^3$ or less. When the bulk density of the hydrogenated nitrile rubber is within this range, the effect of the phenol-based antiaging agent is highly enhanced, the stability of the conductive material dispersion is excellent, and the cycle characteristics of the electrochemical element are improved and cracking of the active material after cycle testing can be prevented.

The bulk density of the hydrogenated nitrile rubber can be easily adjusted, for example, by drying with a screw-type extruder described below or by baling the hydrogenated nitrile rubber.

The hydrogenated nitrile rubber of the present invention is not particularly limited, but is preferably one obtained by emulsion polymerizing a nitrile group-containing monomer and a conjugated diene monomer, coagulating the resulting polymer with calcium chloride, and hydrogenating the polymer. When obtaining a polymer by coagulating an emulsion polymerization liquid, the size, shape, and properties of the water-containing crumbs produced will vary depending on the type of coagulant used, and the residues of various secondary materials in the polymerization and coagulation processes that can be removed in the subsequent washing and dehydration processes will differ. It is not possible to verify all traces of these secondary materials and their reactants, and especially when used in electrochemical elements, these slight residues affect various characteristics. For this reason, for electrochemical element applications, it is preferable to use calcium chloride as a coagulant to hydrogenate the polymer obtained. Furthermore, among calcium compounds, those using calcium chloride are preferred because they are easily removed in the subsequent washing and purification processes, and can reduce the residues in the hydrogenated nitrile rubber. Hydrogenated nitrile rubber obtained by hydrogenating nitrile rubber obtained by using calcium chloride as a coagulant is excellent in electrode peeling characteristics of electrochemical elements such as lithium ion secondary batteries, and is more preferable because it prevents deterioration of cycle characteristics and cracking of the active material layer after cycle tests than when other coagulants are used.

The hydrogenated nitrile rubber of the present invention is preferably one obtained by emulsion polymerizing a nitrile group-containing monomer and a conjugated diene monomer, adding the phenol-based antiaging agent to the resulting polymer, and coagulating the polymer with calcium chloride, and hydrogenating the polymer

The effect of the specific antiaging agent is much higher and more preferable when the hydrogenated nitrile rubber is produced by adding the antiaging agent to the emulsion polymerization liquid obtained by emulsion polymerization of a nitrile group-containing monomer and a conjugated diene monomer, rather than mixing the antiaging agent with the hydrogenated nitrile rubber after production. Although this cannot be measured, it is believed that by coagulating the emulsion polymerization liquid in which the phenol-based antiaging agent is uniformly dispersed with calcium chloride, the antiaging agent is uniformly and finely dispersed in the hydrogenated nitrile rubber obtained as it is, thereby showing a high effect. In the present invention, the addition of the phenol-based antiaging agent is more preferable in the polymerization liquid containing the nitrile rubber after emulsion polymerization than in the reaction solution containing the hydrogenated nitrile rubber after hydrogenation, because less emulsifier is used and the antiaging agent is uniformly dispersed in the hydrogenated nitrile rubber.

<Method of manufacturing hydrogenated nitrile rubber>

The method of manufacturing hydrogenated nitrile rubber of the present invention is not particularly limited, but for example, it can be easily manufactured by emulsion polymerizing a monomer component containing a nitrile group-containing monomer and a conjugated diene monomer, adding a phenol-based antiaging agent to the resulting polymer, and then coagulating the polymer (nitrile rubber) with calcium chloride, and then hydrogenating the polymer by any of the methods (1) to (3).

    (1) A hydrogenation reaction is carried out using a ruthenium catalyst
    (2) A metathesis reaction with a co-olefin is carried out using a ruthenium catalyst, followed by a hydrogenation reaction
    (3) A metathesis reaction with a co-olefin is carried out using a ruthenium catalyst, followed by a hydrogenation reaction using a hydrogenation catalyst other than the ruthenium catalyst

(Emulsion polymerization process)

The monomer components used are the same as those described in the monomer components above, and the amount used may be appropriately selected so as to obtain the monomer composition of the hydrogenated nitrile rubber.

The emulsifier used in the emulsion polymerization is not particularly limited, but for example includes anionic emulsifiers, cationic emulsifiers, and nonionic emulsifiers, and preferably contains an anionic emulsifier.

The anionic emulsifiers are not particularly limited, and examples thereof include salts of fatty acids such as myristic acid, palmitic acid, oleic acid, and linolenic acid; alkyl benzenesulfonates such as sodium dodecylbenzene sulfonate; sulfates such as sodium lauryl sulfate, and phosphates such as polyoxyalkylene alkyl ether phosphates; and alkyl sulfosuccinates. Among these anionic emulsifiers, fatty acid salts and sulfates are preferred, and fatty acid salts are particularly preferred. Suitable sulfates include, for example, sodium lauryl sulfate, ammonium lauryl sulfate, sodium myristyl sulfate, sodium laureth sulfate, sodium polyoxyethylene alkyl sulfate, and sodium polyoxyethylene alkylaryl sulfate. Suitable fatty acid salts include, for example, potassium oleate, sodium oleate, and potassium palmitate, with potassium oleate being particularly preferred.

These emulsifiers can be used alone or in combination of two or more kinds. The amount used is usually 0.01 to 10 parts by mass, preferably 0.1 to 5 parts by mass, and more preferably 1 to 3 parts by mass, per 100 parts by mass of the monomer component.

The method for mixing the monomer component, emulsifier, and water can preferably follow a conventional method, such as a method of stirring the monomer, emulsifier, and water using a stirrer such as a homogenizer or a disk turbine. The amount of water used is usually 10 to 750 parts by mass, preferably 50 to 500 parts by mass, and more preferably 100 to 400 parts by mass, per 100 parts by mass of the monomer component.

The polymerization catalyst used in emulsion polymerization is not particularly limited as long as it is one that is commonly used in emulsion polymerization, but for example, a redox catalyst consisting of a radical generator and a reducing agent can be used.

The radical generator can be, for example, a peroxide or an azo compound, and is preferably a peroxide. As the peroxide, an inorganic peroxide or an organic peroxide can be used.

The inorganic peroxide can be, for example, sodium persulfate, potassium persulfate, hydrogen peroxide, ammonium persulfate, and the like, and among these compounds, potassium persulfate, hydrogen peroxide, and ammonium persulfate are preferred, with potassium persulfate being particularly preferred.

There are no particular limitations on the organic peroxides, so long as they are known to be used in emulsion polymerization. For example, the organic peroxides include 2,2-di(4,4-di-(t-butylperoxy)cyclohexyl)propane, 1-di-(t-hexylperoxy)cyclohexane, 1,1-di-(t-butylperoxy)cyclohexane, 4,4-di-(t-butylperoxy)n-butyl valerate, 2,2-di-(t-butylperoxy)butane, t-butyl hydroperoxide, cumene hydroperoxide, diisopropylbenzene hydroperoxide, paramenthane hydroperoxide, benzoyl peroxide, 1,1,3,3-tetraethylbutyl hydroperoxide, t-butylcumyl peroxide, di-t-butyl peroxide, di-t-hexyl peroxide, di(2-t-butylperoxyisopropyl)benzene, dicumyl peroxide, diisobutyryl peroxide, di(3,5,5-trimethylhexanoyl)peroxide, and dilauroyl peroxide.

These radical generators can be used alone or in combination of two or more kinds, and the amount used is usually in the range of 0.0001 to 5 parts by mass, preferably 0.0005 to 1 part by mass, and more preferably 0.001 to 0.5 parts by mass, per 100 parts by mass of the monomer component.

The amount of water used in the emulsion polymerization reaction may be only one that is used in the emulsion of the monomer components, but is usually adjusted to be in the range of 10 to 1000 parts by mass, preferably 50 to 500 parts by mass, more preferably 80 to 400 parts by mass, and most preferably 100 to 300 parts by mass, per 100 parts by mass of the monomer components used in the polymerization.

The emulsion polymerization reaction may be carried out in accordance with a conventional method, and may be any of a batch type, semi-batch type, or continuous type. The polymerization temperature and polymerization time are not particularly limited and may be appropriately selected depending on the type of polymerization initiator used. The polymerization temperature is usually in the range of 0 to 100°C, preferably 5 to 80°C, and more preferably 10 to 50°C, and the polymerization time is usually 0.5 to 100 hours, preferably 1 to 10 hours.

The polymerization conversion rate of the emulsion polymerization reaction is not particularly limited, but is usually 70 mass% or more, preferably 80 mass% or more, and more preferably 90 mass% or more, and it is therefore suitable to produce under this condition a hydrogenated nitrile rubber with excellent strength characteristics and no monomer odor. A polymerization terminator may be used to terminate the polymerization.

(Antiaging agent addition process)

The phenol-based antiaging agent used is the same as the phenol-based antiaging agent contained in the hydrogenated nitrile rubber, and the method of adding the phenol-based antiaging agent to the emulsion polymerization liquid is not particularly limited and may be in the usual manner, for example, it may be added as it is, or emulsified with an emulsifier and added.

The amount of the phenol-based antiaging agent used may be appropriately selected so as to be the content of the antiaging agent in the hydrogenated nitrile rubber of the present invention, but is usually in the range of 0.001 to 15 parts by mass, preferably 0.01 to 10 parts by mass, more preferably 0.1 to 5 parts by mass, particularly preferably 0.3 to 3 parts by mass, and most preferably 0.5 to 2 parts by mass, per 100 parts by mass of the monomer component.

(Coagulation step)

The method of coagulating the emulsion polymerization liquid to which the antiaging agent has been added with calcium chloride may be a conventional method, and is not particularly limited. The coagulation reaction is a method of isolating the polymer by coagulating it from the emulsion polymerization liquid (latex) after emulsion polymerization.

In the present invention, calcium chloride is used as a coagulant, and the Ca content in the hydrogenated nitrile rubber produced is set within a specific range, which contributes to the dispersibility (viscosity characteristics) of the conductive material dispersion, and extremely increases the peel strength of the produced electrode. It is also preferable because it is excellent in the cycle characteristics of the electrochemical element and the effect of suppressing cracking of the electrode active material after cycle testing.

The solid concentration of the emulsion polymerization liquid after emulsion polymerization used in the coagulation reaction is not particularly limited, but is usually adjusted to a range of 5 to 50 mass%, preferably 10 to 45 mass%, and more preferably 20 to 40 mass%.

The calcium chloride used is usually used as an aqueous solution, and the coagulant concentration of the aqueous solution is usually in the range of 0.1 to 70 mass%, preferably 1 to 60 mass%, more preferably 5 to 50 mass%, and particularly preferably 10 to 30 mass%, which is suitable for concentrating the particle size of the generated water-containing crumbs uniformly in a specific region.

There are no particular limitations on the temperature in the coagulation reaction, but a temperature of 40°C or higher, preferably 40 to 90°C, and more preferably 50 to 80°C, is usually used to generate uniform water-containing crumbs.

There are no particular limitations on the contact between the emulsion polymerization liquid and the calcium chloride aqueous solution (coagulation liquid), but for example, either a method of adding the emulsion polymerization liquid to the coagulation liquid being stirred, or a method of adding the coagulation liquid to the emulsion polymerization liquid being stirred, is acceptable, but the method of adding the coagulation liquid to the emulsion polymerization liquid being stirred is preferable because it makes the shape and diameter of the water-containing crumbs that are generated uniform and concentrated, and it significantly improves the washing efficiency of the emulsifier and coagulant.

After the coagulation step, the resulting water-containing crumbs are usually washed and then dried to obtain the polymer before hydrogenation.

The washing method is not particularly limited and may be any ordinary method, but it is effective to wash the water-containing crumbs coagulated with the high concentration calcium chloride aqueous solution with a large amount of water. The amount of water used is usually 10 to 500 times, preferably 25 to 250 times, and more preferably 50 to 100 times, per 100 parts by mass of the polymer.

There is no limitation to the temperature of the water used for washing, but it is preferable to use warm water, which is usually 40°C or higher, preferably 40 to 100°C, more preferably 50 to 90°C, and most preferably 60 to 80°C, as this significantly can increase the washing efficiency, and thus suitable. The method of setting the temperature of the washing water at or above the lower limit makes the emulsifier and coagulant liberated from the water-containing crumbs, thereby resulting in the washing efficiency being further improved.

There is no limitation to the washing time, but the washing time is usually in the range of 1 to 120 minutes, preferably 2 to 60 minutes, and more preferably 3 to 30 minutes.

The above-mentioned washed water-containing crumbs can be dried in a conventional manner, for example, using a dryer such as a hot air dryer, a vacuum dryer, an expander dryer, a kneader type dryer, or a screw type extruder.

The shape of the dried rubber (polymer) is not particularly limited, and examples include crumbs, powder, rods, and sheets. The moisture content of the dried rubber is less than 1 mass%, preferably 0.8 mass% or less, and more preferably 0.6 mass% or less.

(Hydrogenation step)

In the present invention, the hydrogenation reaction of the obtained polymer is carried out by at least one method selected from the following (1) to (3).

(1) A hydrogenation reaction is carried out using a ruthenium catalyst

(2) A metathesis reaction is carried out with a co-olefin using a ruthenium catalyst, and then a hydrogenation reaction is carried out using the same catalyst

(3) A metathesis reaction is carried out with a co-olefin using a ruthenium catalyst, and then a hydrogenation reaction is carried out using a hydrogenation catalyst other than the ruthenium catalyst

There are no particular limitations on the ruthenium catalyst used, and any known ruthenium catalyst can be used. Among these, it is preferable to use a Grubbs catalyst such as bis(tricyclohexylphosphine)benzylidene ruthenium dichloride or 1,3-bis(2,4,6-trimethylphenyl)-2-(imidazolidinylidene)(dichlorophenylmethylene)(tricyclohexylphosphine) ruthenium.

Metathesis reaction

The metathesis reaction can be carried out using the method described in JP 4509792 B, for example.

The metathesis reaction is carried out by dissolving the polymer (nitrile rubber) in a solvent in the presence of a co-olefin.

Examples of co-olefin include olefins having 2 to 16 carbon atoms, such as ethylene, isobutane, styrene, and 1-hexane, and functional group-containing unsaturated compounds, such as cis-2-butene-1,4-diol, 3-butene-1-amine, vinyltrimethoxysilane, methoxypolyalkylene glycol methacrylate, and 2-(methacryloyloxy)ethanesulfonic acid, with functional group-containing unsaturated compounds being preferred.

The amount of co-olefin used is usually 0.1 to 20 parts by mass, preferably 0.5 to 10 parts by mass, and more preferably 1 to 5 parts by mass, per 100 parts by mass of the polymer.

The reaction can be carried out in a solvent that does not inactivate the catalyst or interfere with the reaction.

Preferred solvents include, but are not limited to, dichloromethane, benzene, toluene, tetrahydrofuran, cyclohexane, and monochlorobenzene (MCB), with MCB being the most preferred. In some cases, the co-olefin itself can act as the solvent, in which case no other solvent is required.

The polymer concentration in the metathesis reaction is not important but is usually in the range of 1 to 20% by weight, preferably 6 to 15% by weight.

The reaction solution in the metathesis reaction is usually stirred vigorously, for example, in the range of 200 to 1000 rpm, preferably 300 to 900 rpm, more preferably 500 to 800 rpm.

The temperature of the metathesis reaction is usually in the range of 20 to 140°C, preferably 60 to 120°C. The reaction time depends on many factors, such as the cement concentration, the amount of catalyst used, and the reaction temperature, but is usually completed within 2 hours. The progress of the metathesis reaction can be monitored using standard analytical methods, such as GPC or solution viscosity.

Hydrogenation reaction

The hydrogenation reaction can be carried out by dissolving the polymer in a solvent and adding a hydrogenation catalyst.

The solvent for the hydrogenation reaction can be either an aqueous solvent or an organic solvent, but is preferably an organic solvent. Suitable organic solvents include, for example, acetone, methyl ethyl ketone, ethyl acetate, tetrahydrofuran, 1,3-dioxane, benzene, toluene, methylene chloride, chloroform, monochlorobenzene (MCB), and dichlorobenzene. Among these, MCB is particularly suitable as it is a good solvent for both the nitrile group-containing nitrile rubber before hydrogenation and the hydrogenated nitrile rubber after hydrogenation.

The hydrogenation method (1) is a method using a ruthenium catalyst as the hydrogenation catalyst, but it can be carried out because the Grubbs catalyst is converted into a dihydride complex $(PR_3)_2RuCl_2H_2$, which is an olefin hydrogenation catalyst, in the presence of hydrogen. It is also possible to use a dihydride complex or other ruthenium catalyst. The hydrogenation reaction can be carried out according to conventional methods, for example, using the method described in JP 6309634 B.

The hydrogenation method (2) is a method in which a metathesis reaction with a co-olefin is carried out using a ruthenium catalyst, and then a hydrogenation reaction is carried out using the same ruthenium catalyst. For example, the Grubbs catalyst is a hydrogenation catalyst that can be used in the presence of hydrogen, so that after the metathesis reaction, the reaction can be carried out in the same reaction vessel by simply replacing the gas with hydrogen. This is preferable. The hydrogenation reaction method is the same as that of (1) above.

The hydrogenation method (3) is a method in which a metathesis reaction is carried out using a ruthenium catalyst, and then a hydrogenation reaction is carried out using a hydrogenation catalyst other than a ruthenium catalyst.

As a hydrogenation catalyst other than a ruthenium catalyst, any commonly used catalyst can be used without any particular restrictions, but known homogeneous hydrogenation catalysts such as the rhodium-based Wilkinson catalyst $((PPh_3)_3RhCl)$ are particularly preferable because they can be used in the same solvent as the ruthenium catalyst and do not require changing the reaction vessel. The hydrogenation reaction may be carried out according to a conventional method, for example, by using the method described in JP 6309634 B. Examples of cocatalysts for the Wilkinson catalyst include phosphine, diphosphine, triphenylphosphine, etc., with triphenylphosphine being preferred. The amount of these cocatalysts used is usually 0.01 to 15 parts by mass, preferably 0.1 to 10 parts by mass, and more preferably 0.5 to 5 parts by mass, based on 100 parts by mass of the polymer to be hydrogenated.

The common points of the hydrogenation methods (1) to (3) are as follows.

The amount of hydrogenation catalyst used may be appropriately selected depending on the purpose of use and the iodine value but is usually in the range of 0.001 to 0.5 parts by mass, preferably 0.005 to 0.1 parts by mass, or 0.01 to 0.05 parts by mass, based on 100 parts by mass of the polymer before hydrogenation.

The polymer concentration in the hydrogenation reaction is not particularly limited as long as the polymer can be dissolved, but is usually 1 to 30 mass%, preferably 5 to 25 mass%, and more preferably 7 to 20 mass%.

The pressure in the hydrogenation reaction is not particularly limited but is usually in the range of 0.1 to 30 MPa, preferably 1 to 20 MPa, and more preferably 5 to 15 MPa.

The hydrogenation reaction temperature is usually in the range of 30 to 200°C, preferably 50 to 170°C, and more preferably 100 to 150°C. The reaction time is usually 1 to 50 hours, and preferably 2 to 25 hours.

The hydrogenation reaction can be stopped by reducing the pressure of the reactor or by cooling the reactor when the desired hydrogenation level is reached. Residual hydrogen is usually removed by nitrogen purging. The hydrogenation catalyst can also be removed before removing the solvent and isolating the hydrogenated nitrile rubber from the organic layer.

(Purification process)

After the hydrogenation reaction, impurities in the hydrogenated polymer are removed as necessary, and then the hydrogenated nitrile rubber is dried to obtain hydrogenated nitrile rubber.

The purification process for the hydrogenated polymer, which is adopted as necessary, may be performed according to a conventional method. For example, it is preferable to perform an adsorbent treatment, which can be easily performed so that the calcium (Ca) content in the hydrogenated nitrile rubber is 1 to 2500 ppm.

The adsorbent is not particularly limited, but examples include activated carbon, ion exchange resin, and synthetic zeolite, and is preferably activated carbon.

The adsorbent treatment can be performed by adding an adsorbent to the reaction liquid containing the hydrogenated nitrile rubber after hydrogenation and mixing it. There is no particular limit to the amount of adsorbent added, but it is usually in the range of 0.001 to 1 part by mass, preferably 0.05 to 0.5 parts by mass, and more preferably 0.01 to 0.4 parts by mass, per 100 parts by mass of hydrogenated nitrile rubber. The mixing temperature is usually room temperature to 80°C, preferably room temperature to 60°C, and the mixing time is usually 1 minute to 1 hour, preferably 20 to 40 minutes.

After the adsorbent treatment, the adsorbent can be removed by filtration or decantation, and the filtrate can be dried to obtain hydrogenated nitrile rubber.

As purification methods by filtration/decantation, for example, after adding an adsorbent as necessary, the methods to be raised include (i) a method of filtering using a bag filter, cartridge filter, filter paper, membrane filter, and the like; (ii) a method of using a filter such as a leaf filter, filter press, candle filter, drum filter, and the like to form a cake layer of a filter aid such as diatomaceous earth or perlite, and then pouring the filtrate; (iii) a method of removing the metal salt formed by the residue during polymerization and metal ions after being precipitated by centrifugal separation and removing the metal salt from the bottom of the filter.

The hydrogenated nitrile rubber of the present invention can be obtained as a dried rubber by removing the solvent after the hydrogenation reaction or after the purification process that is performed as necessary after the hydrogenation reaction.

<Drying hydrogenated nitrile rubber using a screw-type extruder>

In drying hydrogenated nitrile rubber, drying using a screw-type extruder is preferable because it can remove the air present and increase the bulk density. Specifically, the hydrogenated nitrile rubber-containing solution after the hydrogenation reaction or after the purification process after the hydrogenation reaction is coagulated, and the resulting water-containing crumbs can be dried using a screw-type extruder.

(Coagulation step)

The coagulation step of the filtrate containing hydrogenated nitrile rubber from which impurities have been removed and obtained in the purification process is not particularly limited, and may be performed according to a conventional method. Specific coagulation methods include a method of contacting with a coagulant and a method of contacting with a large amount of poor solvent, and the preferred method is a method of contacting with a large amount of poor solvent. There is no particular limit to the poor solvent, but methanol, water, steam, etc. are preferably used. The coagulation reaction may be appropriately selected. For example, the coagulation reaction temperature is usually selected within the range of room temperature to 100°C, and the coagulation reaction time is selected within the range of several minutes to several hours.

The hydrogenated nitrile rubber water-containing crumbs generated in the coagulation reaction can be washed as necessary. There is no particular limited to the washing method, and may be performed in a conventional manner, but washing with a large amount of water is efficient. The amount of water used is usually 10 to 500 times, preferably 25 to 250 times, more preferably 50 to 100 times, per 100 parts by mass of the polymer. The temperature of the water used for washing is not particularly limited, but it is preferable to use warm water, and it is usually 40°C or higher, preferably 40 to 100°C, more preferably 50 to 90°C, and most preferably 60 to 80°C, because this significantly increases the washing efficiency. By setting the temperature of the washing water to the above lower limit or higher, the emulsifier and coagulant are liberated from the water-containing crumbs, thereby resulting in the washing efficiency being further improved.

After coagulation or washing, the water-containing crumbs can be isolated by filtering.

(Drying process)

In the present invention, the water-containing crumbs of the hydrogenated nitrile rubber isolated above are dried using a screw-type extruder. By melt-kneading and drying the hydrogenated nitrile rubber under reduced pressure in the screw-type extruder, the air contained therein is removed and a dried rubber (hydrogenated nitrile rubber) with a high bulk density is obtained. When used as a positive electrode material, it has excellent dispersion stability with the conductive material, and is suitable for improving the peel strength of the electrochemical element electrode and suppressing the cracking of the active material layer after cycle testing.

-Screw-type extruder-

Dehydration of the dehydration barrel

The dehydration of the water-containing crumb is carried out in a dehydration barrel having a dehydration slit. The opening of the dehydration slit may be appropriately selected according to the conditions of use, but it is usually 0.1 to 1 mm, preferably 0.2 to 0.6 mm, which is suitable for efficient dehydration of the water-containing crumb with low loss of the water-containing crumb.

The number of dehydration barrels in a screw-type extruder is not particularly limited, but it is usually suitable for efficient dehydration of the sticky hydrogenated nitrile rubber to use a plurality of barrels, preferably 2 to 10 barrels, more preferably 3 to 6 barrels.

The set temperature of the dehydration barrel is appropriately selected depending on the type of the hydrogenated nitrile rubber, the ash content, the water content, and the operating conditions, but it is usually 60 to 150°C, preferably 70 to 140°C, more preferably 80 to 130°C. The set temperature of the dehydration barrel for dehydration in a drained state is usually 60°C to 120°C, preferably 70°C to 110°C, and more preferably 80°C to 100°C. The set temperature of the dehydration barrel for drying in an exhausted steam state is usually 100°C to 150°C, preferably 105°C to 140°C, and more preferably 110°C to 130°C.

The water content after dehydration, in which water is squeezed out of the water-containing crumb, is not particularly limited, but is usually 1 to 45 mass%, preferably 1 to 40 mass%, more preferably 5 to 35 mass%, and particularly preferably 10 to 35 mass%.

Drying in the drying barrel

The water-containing crumb dehydrated in the above-mentioned dehydration barrel is further dried in the drying barrel under reduced pressure.

The degree of vacuum in the drying barrel may be appropriately selected, but is usually 1 to 50 kPa, preferably 2 to 30 kPa, and more preferably 3 to 20 kPa, which is suitable for efficient drying of the water-containing crumbs. In addition, by extruding the molten hydrogenated nitrile rubber through the drying barrel under reduced pressure, the air present inside is also removed, thereby making it possible suitably to produce a sheet-like hydrogenated nitrile rubber with a high bulk density.

The set temperature of the drying barrel may be appropriately selected, but is usually 100 to 250°C, preferably 110 to 200°C, and more preferably 120 to 180°C, which allows efficient drying without discoloration or deterioration of the hydrogenated nitrile rubber.

The number of drying barrels in the screw-type extruder is not particularly limited, but is usually multiple, preferably 2 to 10, and more preferably 3 to 8. When there are multiple drying barrels, the degree of vacuum may be similar for all drying barrels or may be different. When there are multiple drying barrels, the set temperatures may be similar for all drying barrels or may be different, but it is preferable to set the temperature of the discharge section (closer to the die) higher than the temperature of the inlet section (closer to the dehydration barrel), thereby making it possible to increase the drying efficiency, that is suitable.

The water content of the dried rubber after drying is usually less than 1 mass%, preferably 0.8 mass% or less, and more preferably 0.6 mass% or less.

Extrusion of hydrogenated nitrile rubber (die section)

The hydrogenated nitrile rubber dehydrated and dried in the screw section of the dehydration barrel and the drying barrel is sent to the straightening die section without a screw. A breaker plate or wire mesh may or may not be provided between the screw section and the die section.

The hydrogenated nitrile rubber extruded can be in various shapes, such as granules, columns, rods, and sheets, depending on the shape of the die nozzle. However, using a roughly rectangular die shape to produce a sheet-like rubber is preferable because it produces a dried rubber with a high bulk density and excellent storage stability with less air entrapment.

The resin pressure in the die section is not particularly limited but is usually in the range of 0.1 to 10 MPa, preferably 0.5 to 5 MPa, and more preferably 1 to 3 MPa, which is preferable because it produces less air entrapment and is excellent in productivity.

Screw-type extruder and operating conditions

The screw length (L) of the screw-type extruder to be used may be appropriately selected depending on the purpose of use, but is usually in the range of 2000 to 15000 mm, preferably 2500 to 10000 mm, and more preferably 3000 to 7000 mm.

The screw diameter (D) of the screw-type extruder to be used may be selected appropriately depending on the purpose of use, but is usually in the range of 50 to 250 mm, preferably 70 to 200 mm, and more preferably 80 to 160 mm.

The ratio (L/D) of the screw length (L) to the screw diameter (D) of the screw-type extruder to be used is not particularly limited, but is usually in the range of 10 to 150, preferably 15 to 100, more preferably 20 to 80, and particularly preferably 30 to 60, so that the water content can be reduced to less than 1 mass% without causing a decrease in the molecular weight of the dried rubber or burning.

The rotation speed (N) of the screw-type extruder to be used may be selected appropriately depending on the various conditions, but is usually 10 to 1000 rpm, preferably 30 to 800 rpm, more preferably 50 to 600 rpm, and most preferably 100 to 400 rpm.

The extrusion rate (Q) of the screw-type extruder to be used is not particularly limited, but is usually in the range of 100 to 1500 kg/hr, preferably 120 to 1200 kg/hr, more preferably 150 to 1000 kg/hr, and most preferably 200 to 800 kg/hr.

The ratio (Q/N) of the extrusion rate (Q) to the rotation speed (N) of the screw-type extruder to be used is not particularly limited but is usually in the range of 1 to 10, preferably 1 to 5, and more preferably 1 to 3.

Dried rubber

The shape of the dried rubber extruded from the screw-type extruder is not particularly limited, and for example, includes shapes of crumb, powder, rod, and sheet, among which the sheet shape is particularly preferred.

<Hydrogenated nitrile rubber bale>

The hydrogenated nitrile rubber bale of the present invention can be produced by baling the dried rubber of the hydrogenated nitrile rubber.

The hydrogenated nitrile rubber bale of the present invention is made of the hydrogenated nitrile rubber, and by baling, the effect of the hydrogenated nitrile rubber of the present invention can be maintained even during storage, which is preferable.

The shape of the hydrogenated nitrile rubber bale of the present invention is not particularly limited but is usually a rectangular parallelepiped. The size is not particularly limited, but the width is usually in the range of 100 to 800 mm, preferably 200 to 500 mm, more preferably 250 to 450 mm, the length is usually in the range of 300 to 1200 mm, preferably 400 to 1000 mm, more preferably 500 to 800 mm, and the height is usually in the range of 50 to 500 mm, preferably 100 to 300 mm, more preferably 150 to 250 mm.

The weight average molecular weight (Mw), the ratio (Mw/Mn) of the weight average molecular weight (Mw) to the number average molecular weight (Mn), the ratio (Mz/Mw) of the Z average molecular weight (Mz) to the weight average molecular weight (Mw), the iodine value, the specific antiaging agent concentration, the ruthenium (Ru) content, the palladium (Pd) content, the calcium (Ca) content, the sodium (Na) content, the magnesium (Mg) content, the chlorine (Cl) content, and the Ca/Cl mass ratio of the hydrogenated nitrile rubber bale of the present invention are the same as those of the hydrogenated nitrile rubber.

The bulk density of the hydrogenated nitrile rubber bale of the present invention is not particularly limited, but is usually 0.6 $g/cm^3$ or more, preferably 0.7 $g/cm^3$ or more, more preferably 0.8 $g/cm^3$ or more, even more preferably 0.85 $g/cm^3$ or more, and most preferably 0.9 $g/cm^3$ or more. The upper limit of the bulk density of the hydrogenated nitrile rubber bale is not particularly limited, but is usually 1.2 $g/cm^3$ or less, preferably 1.15 $g/cm^3$ or less, more preferably 1.1 $g/cm^3$ or less, even more preferably 1.05 $g/cm^3$ or less, and most preferably 1 $g/cm^3$ or less. When the bulk density of the hydrogenated nitrile rubber bale is within this range, the effect of the phenol-based antiaging agent is highly enhanced, the stability of the conductive material dispersion is excellent, and the cycle characteristics of the electrochemical element are improved, and the cracking of the active material after cycle testing can be prevented.

The moisture content of the hydrogenated nitrile rubber bale of the present invention is not particularly limited, but is usually less than 1 mass%, preferably 0.8 mass% or less, and more preferably 0.6 mass% or less, which is suitable for excellent storage stability.

The Mooney viscosity (ML1+4, 100°C) of the hydrogenated nitrile rubber bale of the present invention is not particularly limited, but is usually in the range of 10 to 150, preferably 15 to 100, and more preferably 20 to 80, which is suitable for achieving a high balance between the conductive material dispersion and the peel strength at the electrode.

The dried hydrogenated nitrile rubber can be baled in the usual manner, for example, by putting the dried rubber in a baler and compressing it. The compression pressure is appropriately selected depending on the purpose of use, but is usually in the range of 0.1 to 15 MPa, preferably 0.5 to 10 MPa, and more preferably 1 to 5 MPa. The compression time is not particularly limited, but is usually in the range of 1 to 60 seconds, preferably 5 to 50 seconds, and more preferably 10 to 40 seconds. Also, it is possible to make a sheet-like dried rubber and stack it to make a bale. Stacking sheets to make a bale is easy to manufacture, and produces a bale with few air bubbles (high bulk density), which is suitable for excellent storage stability.

In the present invention, by stacking the sheet-like dried rubber (hydrogenated nitrile rubber) extruded from the screw-type extruder, a suitable hydrogenated nitrile rubber bale with a high bulk density can be easily manufactured.

<Positive electrode material/positive electrode binder>

The positive electrode material of the present invention is characterized by using the above-mentioned hydrogenated nitrile rubber or hydrogenated nitrile rubber bale. When hydrogenated nitrile rubber bale is used as a positive electrode material, it is usually used after being finely divided and dissolved or dispersed in a solvent.

The positive electrode binder of the present invention is prepared by dissolving or dispersing the hydrogenated nitrile rubber or the hydrogenated nitrile rubber bale in N-methylpyrrolidone (NMP), and is suitable as a material for manufacturing a positive electrode of an electrochemical element.

The positive electrode binder of the present invention can be combined with other components as necessary, in addition to the hydrogenated nitrile rubber and NMP. The other components are not particularly limited, but examples thereof include binders (polyvinylidene fluoride, polyacrylate, and the like) other than hydrogenated nitrile rubber, reinforcing materials, leveling agents, viscosity adjusters, and electrolyte additives. These components are not particularly limited as long as they do not affect the battery reaction, and known ones can be used. The positive electrode binder of the present invention may also contain a solvent other than NMP to the extent that the characteristics of the present invention are not impaired. These other components may be used alone or in combination of two or more types in any ratio.

The solid concentration of the positive electrode binder of the present invention is not particularly limited but is usually in the range of 0.1 to 40 mass%, preferably 0.5 to 20 mass%, and more preferably 1 to 10 mass%.

The hydrogenated nitrile rubber, NMP, and other components used as necessary may be mixed in a conventional manner.

<Electrode for electrochemical element>

The positive electrode of the present invention is characterized by comprising a positive electrode mixture layer containing a binder containing the hydrogenated nitrile rubber, a conductive material, and a positive electrode active material, and a current collector. The positive electrode binder and the conductive material are mixed with a solvent as necessary, and then the positive electrode active material is mixed to form a positive electrode mixture layer slurry, which is then applied to the current collector and dried.

(Conductive material)

The conductive material is a component that functions to ensure electrical contact between electrode active materials. Carbonaceous materials can be suitably used as the conductive material. Examples of such carbonaceous materials include carbon black (e.g., acetylene black, Ketjen Black (registered trademark), furnace black, and the like), single-walled or multi-walled carbon nanotubes (multi-walled carbon nanotubes include cup-stacked types), carbon nanohorns, vapor-grown carbon fibers, milled carbon fibers obtained by crushing polymer fibers after firing, single-layered or multi-layered graphene, and carbon nonwoven fabric sheets obtained by firing nonwoven fabric made of polymer fibers. These carbonaceous materials may be used alone or in combination of two or more types in any ratio. Among them, carbon nanotubes (CNTs) are preferred from the viewpoint of forming a preferable conductive path.

When the positive electrode binder of the present invention is mixed with the conductive material, the quantitative ratio of the conductive material to the positive electrode binder is not particularly limited. For example, the conductive material and the positive electrode binder may be mixed in a range of usually 1 to 100 parts by mass, preferably 5 to 50 parts by mass, and more preferably 10 to 30 parts by mass of the hydrogenated nitrile rubber per 100 parts by mass of the conductive material to obtain a conductive material dispersion. In addition, when mixing the positive electrode binder and the conductive material, NMP can be added as necessary to adjust the viscosity.

The solid concentration obtained when the positive electrode binder of the present invention and the conductive material are mixed is usually 0.01 mass% or more, preferably 1.0 mass% or more, and more preferably 3.0 mass% or more, and the upper limit is usually 10.0 mass% or less, preferably 9.0 mass% or less, and more preferably 8.0 mass% or less. If the solid concentration is equal to or higher than the lower limit, the coatability of the conductive material dispersion can be improved. In addition, if the solid concentration is equal to or lower than the upper limit, the rate characteristics of the obtained electrochemical element can be improved.

The method of mixing the positive electrode binder of the present invention and the conductive material is not particularly limited, and for example, using a known mixing device can mix the positive electrode binder and the conductive material.

(Positive electrode active material)

The positive electrode active material is not particularly limited, but when the electrochemical element is a lithium-ion secondary battery, it can be a metal oxide containing lithium (Li). As the positive electrode active material, a positive electrode active material containing at least one selected from the group consisting of cobalt (Co), nickel (Ni), manganese (Mn), and iron (Fe) in addition to lithium (Li) is preferable. Examples of such positive electrode active materials include lithium-containing cobalt oxide ($LiCoO_2$), lithium manganate ($LiMn_2O_4$), lithium-containing nickel oxide ($LiNiO_2$), lithium-containing composite oxide of Co-Ni-Mn, lithium-containing composite oxide of Ni-Mn-Al, lithium-containing composite oxide of Ni-Co-Al, olivine-type lithium manganese phosphate ($LiMnPO_4$), olivine-type lithium iron phosphate ($LiFePO_4$), lithium-excess spinel compound represented by $Li_{1+x}Mn_{2-x}O_4$ (0<X<2), $Li[Ni_{0.17}Li_{0.2}Co_{0.07}Mn_{0.56}]O_2$, $LiNi_{0.5}Mn_{1.5}O_4$, $Li[Ni_{0.5}Co_{0.2}Mn_{0.3}]O_2$, and the like. The particle size of the positive electrode active material is not particularly limited but can be the same as that of the conventionally used electrode active material. The positive electrode active material may be used alone or in any combination of two or more kinds in any ratio.

The positive electrode active material may be mixed with the mixture of the positive electrode binder and conductive material to form a positive electrode mixture layer slurry. The mixing method is not particularly limited and may be performed using a known mixing device. The amount of the positive electrode active material is not particularly limited and may be within the range of conventionally used amounts.

The positive electrode of the present invention can be obtained by applying the positive electrode mixture layer slurry to the current collector and drying it. The positive electrode of the present invention has a positive electrode mixture layer formed from the above-mentioned positive electrode binder containing the hydrogenated nitrile rubber of the present invention, and therefore has excellent flexibility and is less likely to crack the electrode active material.

(Current collector)

The current collector is made of a material that is electrically conductive and electrochemically durable. There is no particular limited to the current collector, and any known current collector can be used. For example, a current collector made of aluminum, or an aluminum alloy may be used as the current collector provided in the positive electrode of a lithium-ion secondary battery. In this case, aluminum and an aluminum alloy may be used in combination, or different types of aluminum alloys may be used in combination. The aluminum and the aluminum alloys are excellent as current collector materials due to the fact that the aluminum and the aluminum alloys have heat resistance and are electrochemically stable.

The method for manufacturing the positive electrode of the present invention is not particularly limited. For example, the positive electrode of the present invention can be manufactured by applying the above-mentioned positive electrode mixture layer slurry of the present invention to at least one surface of a current collector and drying it to form a positive electrode mixture layer. More specifically, the manufacturing method includes a step of applying the positive electrode mixture layer slurry to at least one surface of a current collector (application step), and a step of drying the positive electrode mixture layer slurry applied to at least one surface of the current collector to form a positive electrode mixture layer on the current collector (drying step).

(Coating process)

The method of coating the positive electrode mixture layer slurry on the current collector is not particularly limited, and any known method can be used. Specifically, as the coating method, a doctor blade method, a dip method, a reverse roll method, a direct roll method, a gravure method, an extrusion method, a brush coating method, or the like can be used. In this case, the electrode slurry can be coated on only one side of the current collector, or on both sides of the current collector. The thickness of the slurry film on the current collector after coating and before drying can be appropriately set depending on the thickness of the positive electrode mixture layer obtained by drying.

(Drying process)

The method of drying the positive electrode mixture layer slurry on the current collector is not particularly limited, and any known method can be used, and examples of such methods include drying with warm air, hot air, or low-humidity air, vacuum drying, and drying by irradiation with infrared rays or electron beams. By drying the positive electrode mixture layer slurry on the current collector in this way, a positive electrode mixture layer can be formed on the current collector, and a positive electrode comprising the current collector and the positive electrode mixture layer can be obtained.

After the drying step, the electrode mixture layer may be subjected to pressure treatment using a die press or roll press. The pressure treatment allows the positive electrode mixture layer to adhere well to the current collector.

Furthermore, if the positive electrode mixture layer contains a curable polymer, the polymer may be cured after the formation of the positive electrode mixture layer.

<Electrochemical element>

The electrochemical element having the above-mentioned positive electrode of the present invention has excellent output characteristics, and is preferably a lithium ion secondary battery.

Here, the structure of a lithium-ion secondary battery as an example of an electrochemical element will be described hereinafter. This lithium-ion secondary battery has a positive electrode, a negative electrode, an electrolyte, and a separator, and the positive electrode is the electrode of the present invention.

(Negative electrode)

The negative electrode is not particularly limited, and any known electrode can be used.

(Electrolyte)

As the electrolyte is usually used an organic electrolyte solution in which a supporting electrolyte is dissolved in an organic solvent. As the supporting electrolyte, there is used for example a lithium salt such as $LiPF_6$, $LiAsF_6$, $LiBF_4$, $LiSbF_6$, $LiAlCl_4$, $LiClO_4$, $CF_3SO_3Li$, $CF_4F_9SO_3Li$, $CF_3COOLi$, $(CF_3CO)_2NLi$, $(CF_3SO_2)_2NLi$, $(C_2F_5SO_2)NLi$, and the like. Among them, $LiPF_6$, $LiClO_4$, and $CF_3SO_3Li$ are preferred, and $LiPF_6$ is particularly preferred, because they are easily soluble in a solvent and show a high degree of dissociation. Further, the electrolyte may be one type of electrolyte used alone, or two or more types used in combination at any ratio. Usually, the lithium-ion conductivity tends to be higher when a supporting electrolyte with a higher degree of dissociation is used, so that the lithium-ion conductivity can be adjusted by the type of supporting electrolyte.

The organic solvent used in the electrolyte is not particularly limited as long as it can dissolve the supporting electrolyte, but for example, carbonates such as dimethyl carbonate (DMC), ethylene carbonate (EC), diethyl carbonate (DEC), propylene carbonate (PC), butylene carbonate (BC), methyl ethyl carbonate (EMC); esters such as γ-butyrolactone and methyl formate; ethers such as 1,2-dimethoxyethane and tetrahydrofuran; sulfur-containing compounds such as sulfolane and dimethyl sulfoxide are preferably used. A mixture of these solvents may also be used. Among them, carbonates are preferred because they have a high dielectric constant and a wide stable potential range, and a mixture of ethylene carbonate and diethyl carbonate is even more preferred.

The concentration of the electrolyte in the electrolytic solution can be adjusted appropriately, and is preferably 0.5 to 15 mass%, more preferably 2 to 13 mass%, and even more preferably 5 to 10 mass%. The electrolytic solution may also contain known additives, such as vinylene carbonate, fluoroethylene carbonate, and ethyl methyl sulfone, which are preferred to add.

(Separator)

The separator is not particularly limited and may be one described in JP 2012-204303 A. Among them, the overall thickness of the separator can be reduced, thereby increasing the ratio of the electrode active material in the lithium-ion secondary battery and increasing the capacity per volume. From this point of view, a microporous membrane made of a polyolefin resin (polyethylene, polypropylene, polybutene, polyvinyl chloride) is preferred.

(Method of manufacturing lithium-ion secondary battery)

The lithium-ion secondary battery according to the present invention can be manufactured, for example, by stacking a positive electrode and a negative electrode with a separator provided between the positive electrode and the negative electrode, rolling or folding the resulting battery in the form of the battery shape as necessary, placing the battery in a battery container, injecting an electrolyte into the battery container, and sealing the battery container. In order to prevent the secondary battery from causing an internal pressure rise or overcharging and discharging, or the like, a fuse, an overcurrent prevention element such as a PTC element, an expanded metal, a lead plate, or the like may be provided as necessary. The shape of the secondary battery may be, for example, any type selected from among a coin type, a button type, a sheet type, a cylindrical type, a square type, a flat type, or the like.

[Example]

The present invention will be specifically described hereinafter based on examples, but the present invention is not limited to these examples. In the following description, the symbols "%", "ppm", and "parts" representing amounts are based on mass unless otherwise specified.

In addition, in a polymer produced by copolymerizing a plurality of types of monomers, the ratio of a monomer unit formed by polymerizing a certain monomer in the polymer usually coincides with the ratio (feed ratio) of the certain monomer to the total monomers used in the polymerization of the polymer, unless otherwise specified. In addition, in the case where a polymer is a hydrogenated polymer obtained by hydrogenating a polymer containing a conjugated diene monomer unit, the total content ratio of the unhydrogenated conjugated diene monomer unit and the alkylene structural unit as the hydrogenated conjugated diene monomer unit in the hydrogenated polymer coincides with the ratio (feed ratio) of the conjugated diene monomer to the total monomers used in the polymerization of the polymer.

In the examples and the comparative examples, various measurements and evaluations were carried out according to the following methods.

<Iodine value>

The iodine value of the hydrogenated nitrile rubber was measured in accordance with JIS K 6235.

<Molecular weight>

(Measurement using DMF solvent)

The weight average molecular weight (Mw), weight average molecular weight (Mw)/number average molecular weight (Mn), Z average molecular weight (Mz), and Z average molecular weight (Mz)/weight average molecular weight (Mw) of hydrogenated nitrile rubber were measured by gel permeation chromatography (GPC) using a 10 mM LiBr-dimethylformamide (DMF) solution under the following measurement conditions.

- Separation column: Shodex KD-806M (Showa Denko K.K.)
- Detector: Differential refractometer detector RID-10A (Shimadzu Corporation)
- Eluent flow rate: 0.3 mL/min
- Column temperature: 40°C
- Standard polymer: TSK standard polystyrene (Tosoh Corporation)

(Measurement using NMP solvent)

The weight average molecular weight (Mw), weight average molecular weight (Mw)/number average molecular weight (Mn), Z average molecular weight (Mz), and Z average molecular weight (Mz)/weight average molecular weight (Mw) of hydrogenated nitrile rubber were measured by gel permeation chromatography (GPC) using an N-methylpyrrolidone (NMP) solution under the following measurement conditions.

- Separation column: Shodex KD-806M (Showa Denko K.K.)
- Detector: Differential refractometer detector RID-10A (Shimadzu Corporation)
- Eluent flow rate: 0.2 mL/min
- Column temperature: 40°C
- Standard polymer: TSK standard polystyrene (Tosoh Corporation)

<Metal content>

About 0.5 g was collected from the hydrogenated nitrile rubber bale, dissolved in about 5 mL of concentrated sulfuric acid, carbonized on a heater, and then incinerated in an electric furnace at 1000°C for about 3 hours. After cooling, about 2 mL of concentrated nitric acid was gradually added for wet decomposition. After decomposition, the acid was concentrated and the volume was adjusted to 10 mL with ultrapure water, and the metal ion concentration was measured using an ICP-MS (Agilent, ICP-MS 7900). The metal ion concentration contained in the hydrogenated nitrile rubber was calculated from the measured value. The metal ions measured at this time were calcium ions, rhodium ions, ruthenium ions, palladium ions, iron ions, sodium ions, and magnesium ions.

<Chlorine content>

The volume 1 g of the hydrogenated nitrile rubber bale was dissolved in 150 ml of a mixture of methyl ethyl ketone and isopropanol in a volume ratio of 4:1, and 2% dilute sulfuric acid was added to prepare a sample solution, which was then dripped with 0.005 N silver nitrate aqueous solution and the chlorine content was calculated by potentiometric titration (HIRANUMA COMITE-101 or equivalent, silver support electrode AG-68/silver reference electrode AM-44).

<Bulk density>

A piece measuring approximately 2 cm × 3 cm × 0.2 cm was cut from the hydrogenated nitrile rubber bale, and the bulk density (g/cm$^3$) was measured using an automatic density meter (manufactured by Toyo Seiki Seisakusho Co., Ltd., product name: "DSG-1").

<Conductive material dispersion viscosity>

The conductive material dispersion obtained in each Example and Comparative Example was measured for 120 seconds at a temperature of 25°C and a shear rate of 10 (1/s) using a rheometer (Anton Paar, "MCR302"), and the average viscosity measured from 61 seconds to 120 seconds was evaluated according to the following criteria.

A: 1 Pa·s or less
B: More than 1 Pa·s to 5 Pa·s or less
C: More than 5 Pa·s to 10 Pa·s or less
D: More than 10 Pa·s

<Conductive material dispersion stability>

The conductive material dispersion obtained in each Example and Comparative Example was measured for its dispersion viscosity ($\eta 0$), and then stored in a sealed container at 25°C for 10 days. After that, the dispersion viscosity was measured again ($\eta 1$), and the viscosity change rate was calculated according to the following, which was regarded as the conductive material dispersion stability. Evaluation was performed according to the following criteria.

$$\text{Viscosity change rate } \Delta\eta = \eta 1/\eta 0 \times 100$$

A: Viscosity change rate $\Delta\eta$ is 90% or more and less than 110%
B: Viscosity change rate $\Delta\eta$ is 80% or more and less than 90%, or 110% or more and less than 120%
C: Viscosity change rate $\Delta\eta$ is 70% or more and less than 80%, or 120% or more and less than 130%
D: Viscosity change rate $\Delta\eta$ is 60% or more and less than 70%, or 130% or more and less than 140%
E: Viscosity change rate $\Delta\eta$ is less than 60%, or 140% or more

<Peel strength>

The positive electrodes prepared in the examples and the comparative examples were cut into rectangles measuring 100 mm in length and 10 mm in width to prepare test pieces. With the side having the positive electrode mixture layer facing down, cellophane tape (compliant with JIS Z1522) was attached to the surface of the positive electrode mixture layer, and one end of the current collector was pulled vertically at a pulling speed of 100 mm/min to measure the stress when peeled off (the cellophane tape was fixed to the test table). The measurement was carried out three times, and the average value was calculated to determine the peel strength, which was evaluated according to the following criteria. The evaluation shows that the higher the peel strength value, the stronger the adhesion of the positive electrode mixture layer to the current collector made of aluminum foil is performed.

A: Peel strength is 15 N/m or more
B: Peel strength is 10 N/m or more and less than 15 N/m
C: Peel strength is 5 N/m or more and less than 10 N/m
D: Peel strength is less than 5 N/m

<Whether or not there is cracking of the active material after cycling>

The lithium ion secondary batteries produced in the examples and comparative examples were disassembled after the cycle test, and the cross-sectional SEM images of the removed positive electrodes were observed at 1000x magnification, and the number of cracks observed in the active material was evaluated as follows.

A: Less than 2 pieces of broken active material
B: 2 or more but less than 5 pieces of broken active material
C: 5 or more but less than 9 pieces of broken active material
D: 9 or more pieces of broken active material

<Output characteristics>

The output characteristics of the lithium-ion secondary batteries produced in the examples and the comparative examples were evaluated by measuring the I-V resistance using the following method.

Similarly to the cycle characteristics, a lithium-ion secondary battery which had undergone three times repeatedly aging treatment and 3 charge and discharge was charged at 25°C until the charge rate reached 50% (i.e., for a cell capacity of 700mAh, until the charge capacity reached 350mAh), and the resistance value was measured with the following procedure.

(1) Calculate the voltage change $\Delta V$ (0.2) when the battery is discharged for 30 seconds using the 0.2C constant current method (I0.2).
(2) Charge the battery for 30 seconds using the 0.2C constant current method.
(3) Calculate the voltage change $\Delta V$ (1.0) when the battery is discharged for 30 seconds using the 1.0C constant current method (I1.0).

$$\text{I-V resistance } (\Omega) = \{\Delta V (1.0) - \Delta V (0.2)\} / (I1.0 - I0.2)$$

Evaluation was performed according to the calculated I-V resistance value as follows:

A: $0.25\Omega$ or less
B: $0.25\Omega$ or more and $0.30\Omega$ or less
C: $0.30\Omega$ or more and $0.35\Omega$ or less
D: $0.35\Omega$ or more

(Example 1)

<Production of hydrogenated nitrile rubber>

-Emulsion polymerization process to washing and drying process-

In a reactor with an internal volume of 10 liters, 100 parts of ion-exchanged water, 33 parts of acrylonitrile as an $\alpha,\beta$-ethylenically unsaturated nitrile monomer, and 67 parts of 1,3-butadiene as a conjugated diene monomer were charged, and 2 parts of potassium oleate as an emulsifier, 0.1 parts of potassium phosphate as a stabilizer, and 0.3 parts of tert-dodecyl mercaptan (TDM) as a molecular weight regulator were added. Emulsion polymerization was carried out at a temperature of 5°C in the presence of 0.35 parts of potassium persulfate as a polymerization initiator, and acrylonitrile and 1,3-butadiene were copolymerized.

When the polymerization conversion rate reached 89%, 0.2 parts of hydroxylamine sulfate was added per 100 parts of monomer to terminate the polymerization. The mixture was then heated and steam distilled at approximately 90°C under reduced pressure to recover the residual monomer, after which 0.1 parts of dibutylhydroxytoluene (BHT), a phenol-based antiaging agent, was added to obtain an emulsion polymerization liquid.

A 25% aqueous solution of calcium chloride ($CaCl_2$) was added as a coagulant in an amount of 3 parts per 100 parts of polymer solids in the obtained emulsion polymerization liquid while stirring, and the polymer in the emulsion polymerization liquid was coagulated. The polymer was then filtered, and washed by passing ion-exchanged water in an amount 50 times the polymer weight, and the polymer was dried under reduced pressure at a temperature of 90°C to obtain a polymer.

-Hydrogenation step I (metathesis reaction)-

Next, 9 parts of the obtained polymer was dissolved in 141 parts of monochlorobenzene, a halogenated hydrocarbon, and charged into a reactor. Then, after heating the reactor to 80°C, 2 L of monochlorobenzene solution containing bis(tricyclohexylphosphine)benzylidene ruthenium dichloride as a Grubbs catalyst was added so that the amount of Grubbs catalyst relative to the polymer was 1000 ppm. Then, 4.4 parts of cis-2-butene-1,4-diol as a co-olefin was added per 100 parts of precursor 1, and the polymer was subjected to metathesis reaction at a stirring speed of 600 rpm. During the reaction, the temperature was kept constant using a cooling coil connected to a temperature control device and a heat sensor.

-Hydrogenation step II (hydrogenation reaction)-

Then, while continuing stirring, the inside of the reactor was degassed three times with 0.7 MPa $H_2$. The temperature of the reactor was then raised to 130°C, and 1 L of a monochlorobenzene solution containing Wilkinson's catalyst and triphenylphosphine was added to the reactor. The amount of Wilkinson's catalyst and the amount of triphenylphosphine per 100 parts of polymer was 0.03 parts and 1 part, respectively. The temperature was then raised to 138°C, and the hydrogenation reaction of the polymer was carried out under the condition of a hydrogen pressure (gauge pressure) of 8.4 MPa.

-Purification process-

After the hydrogenation reaction was completed, 0.2 parts of activated carbon with an average diameter of 15 $\mu$m was added to the reactor and stirred for 30 minutes to adjust the concentration of divalent or higher metal ions including calcium ions. Then, the mixture was filtered through a filter with a pore size of 5 $\mu$m. The filtered solution was then heated and dried until the monochlorobenzene solvent was reduced to 50 ppm, and hydrogenated nitrile rubber A was isolated. The iodine value, weight average molecular weight, and metal content of the obtained hydrogenated nitrile rubber A were measured. The results are shown in Table 1. Note that the following Tables 1-1 and 1-2 are divided tables, and in this specification, Tables 1-1 and 1-2 are collectively referred to as Table 1. In addition, 20 parts (20 kg) of the isolated nitrile rubber A were filled into a baler measuring 300 × 650 × 300 mm and pressed at a pressure of 3 MPa for 30 seconds to obtain nitrile rubber bale A. When the hydrogenated nitrile rubber bale A was measured in the same way as hydrogenated nitrile rubber A, the measured values were the same.

<Preparation of positive electrode binder>

920 parts of NMP was weighed out and placed in a 2 L container equipped with a stirring blade and heated to 80°C. Next, 80 parts of hydrogenated nitrile rubber A cut into pieces of about 1 cm square from the hydrogenated nitrile rubber bale A produced above was added, and the mixture was dissolved while continuing to stir for 5 hours to prepare a positive electrode binder A with a solid concentration of 8%.

<Preparation of conductive material dispersion>

5 parts of multi-walled carbon nanotubes (BET specific surface area: 250 m$^2$/g) as a conductive material, 12.5 parts (equivalent to 1 part as solid content) of the positive electrode binder with a solid concentration of 8% obtained as described above, and 82.5 parts of NMP as an organic solvent were added, and the mixture was stirred using a disper (3000 rpm, 10 minutes). After that, a bead mill (Ashizawa Finetech, "LMZ015") using zirconia beads with a diameter of 1 mm was used to mix for 1 hour at a peripheral speed of 8 m/s to prepare a conductive material dispersion, and the viscosity was measured, and the results are shown in Table 1. The stability of the conductive material dispersion was also evaluated, and the results are shown in Table 1.

<Preparation of slurry for secondary battery positive electrode>

98.0 parts of a ternary active material (LiNi$_{0.5}$Co$_{0.2}$Mn$_{0.3}$O$_2$) (average particle size: 10 $\mu$m) having a layered structure as a positive electrode active material, 1.0 part of polyvinylidene fluoride as a binder, 1.0 part of the above-mentioned conductive material dispersion (solid content equivalent), and NMP were added to the above-mentioned conductive material dispersion, and mixed with a planetary mixer (60 rpm, 30 minutes) to prepare a positive electrode slurry. The amount of NMP added was adjusted so that the viscosity (The viscosity was measured using a single cylindrical rotational viscometer according to JIS Z8803:1991. Temperature: 25°C, rotation speed: 60rpm) of the resulting positive electrode slurry was within the range of 4000 to 5000 mPa·s.

<Preparation of positive electrode>

A 20 μm thick aluminum foil was prepared as a current collector. The above positive electrode slurry was applied onto the aluminum foil using a comma coater so that the coating weight after drying would be 20 mg/cm$^2$. The coating was dried for 5 minutes at 120°C and 5 minutes at 130°C, and then heated for 10 hours at 60°C to obtain a positive electrode base sheet. The positive electrode base sheet was rolled using a roll press to prepare a sheet-shaped positive electrode consisting of a positive electrode mixture layer with a density of 3.5 g/cm$^3$ and aluminum foil. The sheet-shaped positive electrode was cut to a width of 4.8 cm and a length of 50 cm to prepare a positive electrode for a lithium ion secondary battery.

The peel strength of the obtained positive electrode for a lithium ion secondary battery was evaluated, and the results are shown in Table 1.

<Preparation of negative electrode for lithium-ion secondary battery>

In a 5 MPa pressure container equipped with a stirrer, 33 parts of 1,3-butadiene as an aliphatic conjugated diene monomer, 3.5 parts of itaconic acid as a carboxylic acid group-containing monomer, 63.5 parts of styrene as an aromatic vinyl monomer, 0.4 parts of sodium dodecylbenzene sulfonate as an emulsifier, 150 parts of ion-exchanged water, and 0.5 parts of potassium persulfate as a polymerization initiator were placed and thoroughly stirred, then heated to 50°C to initiate polymerization. When the polymerization conversion rate reached 96%, the mixture was cooled to stop the polymerization reaction, and a mixture containing a particulate binder (styrene-butadiene copolymer) was obtained. After adjusting the pH to 8 by adding a 5% aqueous sodium hydroxide solution to the above mixture, unreacted monomers were removed by heating and vacuum distillation. The mixture was then cooled to 30°C or less to obtain an aqueous dispersion containing a binder for the negative electrode.

Next, 48.75 parts of artificial graphite and 48.75 parts of natural graphite were added as negative electrode active materials, and 1 part of carboxymethyl cellulose was added as a thickener to a planetary mixer. The mixture was then diluted with ion-exchanged water to a solid concentration of 60%, and then kneaded for 60 minutes at a rotation speed of 45 rpm. Then, 1.5 parts of the aqueous dispersion containing the negative electrode binder obtained as described above was added as a solid equivalent and kneaded for 40 minutes at a rotation speed of 40 rpm. Then, ion-exchanged water was added to the mixture so that the viscosity was 3000±500 mPa·s (measured with a B-type viscometer at 25°C and 60 rpm), thereby preparing a slurry for the negative electrode mixture layer.

Next, a copper foil with a thickness of 15 μm was prepared as a current collector. The negative electrode slurry was applied to both sides of copper foil so that the coating amount after drying was 10 mg/cm$^2$, and then dried at 80°C for 5 minutes and 120°C for 5 minutes to obtain a negative electrode raw sheet. This negative electrode raw sheet was rolled with a roll press to produce a sheet-shaped negative electrode consisting of a negative electrode mixture layer (both sides) with a density of 1.6 g/cm$^3$ and copper foil. The sheet-shaped negative electrode was then cut to a width of 5.0 cm and a length of 52 cm to obtain a lithium-ion secondary battery negative electrode.

<Preparation of lithium-ion secondary battery>

The prepared positive electrode for lithium-ion secondary battery and negative electrode for lithium-ion secondary battery were wound with the electrode mixture layers facing each other, with a separator (microporous film made of polyethylene) with a thickness of 15 μm interposed between them, using a core with a diameter of 20 mm to obtain a wound body. The obtained wound body was then compressed in one direction at a speed of 10 mm/sec until the thickness became 4.5 mm. The compressed wound body had an elliptical shape when seen in a plan view, and the ratio of its major axis to its minor axis (major axis/minor axis) was 7.7.

Further, a 1.0 M LiPF$_6$ solution (solvent: mixed solvent of ethylene carbonate (EC)/diethyl carbonate (DEC) = 3/7 (volume ratio), additive: containing 2 volume% vinylene carbonate (solvent ratio)) was prepared as the electrolyte.

The compressed wound body was then housed in an aluminum laminate case together with 3.2 g of non-aqueous electrolyte. A nickel lead wire was then connected to a predetermined location of the negative electrode, and an aluminum lead wire was connected to a predetermined location of the positive electrode, after which the opening of the case was thermally sealed to obtain a lithium-ion secondary battery. This lithium-ion secondary battery was a pouch-shaped battery of a predetermined size capable of housing the wound body, and the nominal capacity of the battery was 700 mAh.

The output characteristics and cracking of the electrode active material after cycling were evaluated for the obtained lithium ion secondary battery. The results are shown in Table 1.

(Example 2)

Hydrogenated nitrile rubber B, hydrogenated nitrile rubber bale B, and positive electrode binder B were obtained in the same manner as in Example 1, except that the amount of Grubbs catalyst in the metathesis reaction was changed to 500 ppm. Measurements and performance evaluations of hydrogenated nitrile rubber B were performed, and the results are shown in Table 1.

(Example 3)

Hydrogenated nitrile rubber C, hydrogenated nitrile rubber bale C, and positive electrode binder C were obtained in the same manner as in Example 1, except that the amount of activated carbon used in the purification process was changed to 0.5 parts. Measurements and performance evaluations of hydrogenated nitrile rubber C were performed, and the results are shown in Table 1.

(Example 4)

Hydrogenated nitrile rubber D, hydrogenated nitrile rubber bale D, and positive electrode binder D were obtained in the same manner as in Example 1, except that the amount of activated carbon used in the purification process was changed to 0.08 parts. Measurements and performance evaluations of hydrogenated nitrile rubber D were performed, and the results are shown in Table 1.

(Example 5)

Hydrogenated nitrile rubber E, hydrogenated nitrile rubber bale E, and positive electrode binder E were obtained in the same manner as in Example 1, except that the amount of activated carbon used in the purification process was changed to 0.07 parts. Measurements and performance evaluations of hydrogenated nitrile rubber E were performed, and the results are shown in Table 1.

(Example 6)

Hydrogenated nitrile rubber F, hydrogenated nitrile rubber bale F, and positive electrode binder F were obtained in the same manner as in Example 1, except that the amount of activated carbon used in the purification process was changed to 0.05 parts. Measurements and performance evaluations of hydrogenated nitrile rubber F were performed, and the results are shown in Table 1.

(Example 7)

Hydrogenated nitrile rubber G, hydrogenated nitrile rubber bale G, and positive electrode binder G were obtained in the same manner as in Example 1, except that the amount of activated carbon used in the purification process was changed to 0.02 parts. Measurements and performance evaluations of hydrogenated nitrile rubber G were performed, and the results are shown in Table 1.

(Reference Example 1)

In the hydrogenation step II, 1 L of a monochlorobenzene solution containing Wilkinson's catalyst and triphenylphosphine was not added to the reactor, and instead palladium-silica (Pd/SiO$_2$) was added as a catalyst so that the amount of Pd in the polymer was 1000 ppm. The hydrogenation reaction was carried out at a temperature of 90°C for 6 hours under a hydrogen pressure of 3.0 MPa, to obtain a hydrogenation reaction product. Except that 1 part of aminopropyl-modified silica (product name "QuadraSil AP", manufactured by SIGMA-ALDRICH; silica with aminopropyl groups introduced on the surface; average particle size: 54 $\mu$m) was added in addition to the activated carbon in the purification process, hydrogenated nitrile rubber H, hydrogenated nitrile rubber bale H, and positive electrode binder H were obtained in the same manner as in Example 1. Measurements and performance evaluations of hydrogenated nitrile rubber H were performed, and the results are shown in Table 1.

(Comparative Example 1)

Hydrogenated nitrile rubber I, hydrogenated nitrile rubber bale I, and positive electrode binder I were obtained in the same manner as in Reference Example 1, except that no phenol-based antiaging agent was added. Measurements and performance evaluations of hydrogenated nitrile rubber I were performed, and the results are shown in Table 1.

(Comparative Example 2)

Hydrogenated nitrile rubber J, hydrogenated nitrile rubber bale J, and positive electrode binder J were obtained in the same manner as in Example 1, except that no phenol-based antiaging agent was added. Measurements and performance evaluations of hydrogenated nitrile rubber J were performed, and the results are shown in Table 1.

(Comparative Example 3)

After adding a large amount of methanol to the activated carbon-treated filtered solution from the purification process of Comparative Example 1 to cause coagulation, the resulting crumbs were filtered off and heated and dried until the monochlorobenzene solvent was reduced to 50 ppm to produce hydrogenated nitrile rubber K (crumb-like). An electrochemical element was fabricated using hydrogenated nitrile rubber K as positive electrode binder K, and the characteristics were evaluated, with the results shown in Table 1.

[Table 1-1]

| | | Example 1 | Example 2 | Example 3 | Example 4 | Example 5 | Example 6 | Example 7 | Reference Example 1 | Comparative Example 1 | Comparative Example 2 | Comparative Example 3 |
|---|---|---|---|---|---|---|---|---|---|---|---|---|
| Hydrogenated nitrile rubber No. | | A | B | C | D | E | F | G | H | I | J | K |
| 1. Production process conditions | | | | | | | | | | | | |
| Acrylonitrile amount | Parts | 33 | 33 | 33 | 33 | 33 | 33 | 33 | 33 | 33 | 33 | 33 |
| 1,3-butadiene amount | Parts | 67 | 67 | 67 | 67 | 67 | 67 | 67 | 67 | 67 | 67 | 67 |
| Addition of antiaging agent | Yes or No | Yes | Yes | Yes | Yes | Yes | Yes | Yes | Yes | No | No | No |
| Hydrogenation catalyst | Type | Ru→Rh | Ru→Rh | Ru→Rh | Ru→Rh | Ru→Rh | Ru→Rh | Ru→Rh | Pd | Pd | Ru→Rh | Pd |
| Grubbs catalyst amount | ppm | 1000 | 500 | 1000 | 1000 | 1000 | 1000 | 1000 | - | - | 1000 | - |
| Wilkinson catalyst amount | Parts | 0.03 | 0.03 | 0.03 | 0.03 | 0.03 | 0.03 | 0.03 | - | - | 0.03 | - |
| Pd catalyst amount | ppm | - | - | - | - | - | - | - | 1000 | 1000 | - | 1000 |
| Activated carbon amount | Parts | 0.2 | 0.2 | 0.5 | 0.08 | 0.07 | 0.05 | 0.02 | 0.2 | 0.2 | 0.2 | 0.2 |

(continued)

| 2. Hydrogenated nitrile rubber characteristics | | | | | | | | | | | | |
|---|---|---|---|---|---|---|---|---|---|---|---|---|
| GPC(DMF) | Mw | 48000 | 120000 | 48000 | 48000 | 48000 | 48000 | 48000 | 48000 | 48000 | 48000 | 48000 |
| | Mz | 82000 | 250000 | 82000 | 82000 | 82000 | 82000 | 82000 | 82000 | 82000 | 82000 | 82000 |
| | Mw/Mn | 2.4 | 2.6 | 2.4 | 2.4 | 2.4 | 2.4 | 2.4 | 2.4 | 2.4 | 2.4 | 2.4 |
| | Mz/Mw | 1.7 | 2.1 | 1.7 | 1.7 | 1.7 | 1.7 | 1.7 | 1.7 | 1.7 | 1.7 | 1.7 |
| GPC(NMP) | Mw | 55000 | 140000 | 55000 | 55000 | 55000 | 55000 | 55000 | 55000 | 55000 | 55000 | 55000 |
| NMP-Mw/DMF-Mw | Mw/Mw | 1.15 | 1.17 | 1.15 | 1.15 | 1.15 | 1.15 | 1.15 | 1.15 | 1.15 | 1.15 | 1.15 |
| Iodine value | mg/100mg | 13 | 22 | 13 | 13 | 13 | 13 | 13 | 12 | 12 | 13 | 13 |
| Antiaging agent | Type | BHT | BHT | BHT | BHT | BHT | BHT | BHT | BHT | None | None | None |
| Content | % | 0.1 | 0.1 | 0.1 | 0.1 | 0.1 | 0.1 | 0.1 | 0.1 | 0.1 | 0.1 | 0.1 |
| (Metal content) | | | | | | | | | | | | |
| Ru | ppm | 8 | 7 | 4 | 10 | 13 | 15 | 18 | <0.1 | <0.1 | 9 | <0.1 |
| Pd | ppm | <0. 1 | <0.1 | <0.1 | <0. 1 | <0.1 | <0.1 | <0.1 | 270 | 270 | <0.1 | 270 |
| Ca | ppm | 76 | 85 | 2 | 350 | 450 | 1300 | 1800 | 76 | 76 | 76 | 76 |
| Cl | ppm | 120 | 130 | 3 | 600 | 900 | 2300 | 2800 | 120 | 120 | 120 | 120 |
| Ca/Cl | Mass ratio | 0.6 | 0.7 | 0.7 | 0.6 | 0.5 | 0.6 | 0.6 | 0.6 | 0.6 | 0.6 | 0.6 |
| Mg | ppm | 1 | 1.7 | 0.5 | 1.8 | 1.8 | 1.5 | 1.7 | 1.2 | 1.1 | 0.8 | 1.1 |
| Na | ppm | 23 | 17 | 16 | 22 | 22 | 32 | 33 | 21 | 22 | 17 | 22 |

[Table 1-2]

| | | Example 1 | Example 2 | Example 3 | Example 4 | Example 5 | Example 6 | Example 7 | Reference Example 1 | Comparative Example 1 | Comparative Example 2 | Comparative Example 3 |
|---|---|---|---|---|---|---|---|---|---|---|---|---|
| Hydrogenated nitrile rubber No. | | A | B | C | D | E | F | G | H | I | J | K |
| 3. Shape of hydrogenated nitrile rubber and bale characteristics | | | | | | | | | | | | |
| Shape | - | Bale | Bale | Bale | Bale | Bale | Bale | Bale | Bale | Bale | Bale | Crumb |
| Bulk density | g/cm$^3$ | 0.74 | 0.74 | 0.74 | 0.74 | 0.74 | 0.74 | 0.74 | 0.74 | 0.74 | 0.74 | 0.55 |
| 4. Performance evaluation | | | | | | | | | | | | |
| Conductive material dispersion liquid viscosity | Pa·s | 0.6 | 3.1 | 0.4 | 0.8 | 0.9 | 2.2 | 3.7 | 0.6 | 0.6 | 0.6 | 0.6 |
| Viscosity (dispersibility) evaluation | | A | B | A | A | A | B | B | A | A | A | A |
| Conductive material dispersion liquid stability | | A | A | A | A | A | A | A | A | D | D | E |
| Peel strength | | A | A | B | A | A | A | A | A | A | A | A |
| Cycle characteristics | | A | A | A | A | A | A | A | A | A | A | A |
| Active material cracking after cycling | | B | B | B | A | A | A | A | C | C | B | C |

From Table 1, the hydrogenated nitrile rubbers A to G of the present invention contain nitrile group-containing monomer units and conjugated diene monomer units and/or alkylene structural units, have a weight average molecular weight (Mw) in the range of 1,000 to 1,000,000 and an iodine value of 100 mg/100 mg or less, contain a phenol-based antiaging agent, and have the Ca content of 1 to 2500 ppm, the Ru content of 0.5 to 50 ppm, the Pd content of 200 ppm or less, the Mg content of 50 ppm or less, and the Na content of 300 ppm or less. The viscosity characteristics (dispersibility) and stability of the conductive material dispersion are excellent, and the peel strength of the manufactured electrode and the output characteristics of the electrochemical element and the effect of suppressing cracking of the electrode active material after cycle testing are also excellent, and it can be seen that each characteristic is highly balanced (none of the evaluations of Examples 1 to 7 were ranked C or D). Of these, it can be seen that hydrogenated nitrile rubbers D and E are the most preferable, with all evaluations being ranked A (Examples 4 to 5). This shows that there is an optimal value for the Ca content in the hydrogenated nitrile rubber (Examples 4 to 5).

It can be seen that the viscosity characteristics (conductive material dispersibility) of the conductive material dispersion tend to increase and deteriorate as the iodine value of the hydrogenated nitrile rubber increases (comparison of Example 1 and Example 2). It can also be seen that the viscosity tends to increase and deteriorate as the Ca content in the hydrogenated nitrile rubber increases (comparison between Example 1 and Examples 3-7). From Table 1, it can be seen that the viscosity characteristics of the conductive material dispersion are excellent when the iodine value of the hydrogenated nitrile rubber is small and the Ca content in the hydrogenated nitrile rubber is small.

The stability of the conductive material dispersion is greatly affected by the presence or absence of a phenol-based antiaging agent, and from Table 1, it can be seen that the stability deteriorates significantly if no phenol-based antiaging agent is present (Comparative Examples 1-3). This is because, without the presence of a phenol-based antiaging agent, oxygen radicals are generated in the hydrogenated nitrile rubber during heating and drying, and it is presumed that these oxygen radicals react with the active sites on the surface of the conductive material, and the resulting crosslinking leads to a deterioration in stability. In addition, the stability of the conductive material dispersion is affected by the bulk density of the hydrogenated nitrile rubber bale. Comparing hydrogenated nitrile rubber bale I (bulk density 0.74 $g/cm^3$) that does not contain a phenol-based antiaging agent with crumb-like hydrogenated nitrile rubber K (bulk density 0.55 $g/cm^3$), the conductive material dispersion stability of the crumb-like hydrogenated nitrile rubber K, which has a low bulk density, was further deteriorated (comparison between Comparative Example 1 and Comparative Example 3). In addition, although no data is shown, the bulk density of the hydrogenated nitrile rubber I (lump-like hydrogenated nitrile rubber that is directly dried) before baling produced in Comparative Example 1 was also low at 0.5 to 0.6 $g/cm^3$, and the conductive material dispersion stability was also deteriorated. These are thought to be due to the fact that the crumb-like or lump-like hydrogenated nitrile rubber, which has a low bulk density, contains a large amount of air, and the dispersion stability with the conductive material is deteriorated due to oxygen radicals generated in the hydrogenated nitrile rubber.

The electrode peel strength was good for all hydrogenated nitrile rubbers A to K produced this time, but it rapidly deteriorated when the Ca content was lower than that of Example 3.

The output characteristics of the electrochemical element were good for all hydrogenated nitrile rubbers A to K tested this time.

It was found that the Ca content in the hydrogenated nitrile rubber correlates with the inhibition of electrode active material cracking after cycle testing of the electrochemical element, and that a higher Ca content is preferable (comparison within Examples 1 to 7). It was also found that the Pd content in the hydrogenated nitrile rubber deteriorates when a large amount remains as hydrogenation catalyst residue (Reference Example 1 and Comparative Example 1).

On the other hand, although not shown in the comparative examples of this application, if the Mg content or Na content in the hydrogenated nitrile rubber is excessively high, the active material in the electrodes of the electrochemical element will crack after the cycle test. However, Table 1 shows that the hydrogenated nitrile rubbers A to G of this invention, which have the Mg content of 50 ppm or less and the Na content of 300 ppm or less, are excellent in all properties, including the viscosity characteristics and stability of the conductive material dispersion, the output characteristics, and the cracking of the electrode active material after the cycle test.

Furthermore, from the examples and Table 1, it can be seen that the novel hydrogenated nitrile rubbers A to G of the present invention can be manufactured by combining known methods, such as adjusting the [Mw] by the amount of catalyst for metathesis reaction, adjusting the [iodine value] by the amount of hydrogenation catalyst, the molecular weight of the polymer after metathesis reaction, and monitoring the hydrogenation rate, adjusting the [Mg, Na] content without using auxiliary materials that cause them in the manufacturing stage such as the emulsion polymerization process and the hydrogenation process, and adjusting the [Ca] used in the coagulant and the [Ru, Rh] used in the hydrogenation catalyst by washing with water and treating with an adsorbent.

(Examples 8 to 14)

A large amount of steam was introduced into the hydrogenated nitrile rubber-containing monochlorobenzene solution filtered after the purification process of Examples 1 to 7 to generate water-containing crumbs. The generated water-containing crumbs were dried using a screw-type extruder under conditions that did not change the various properties of the hydrogenated nitrile rubber, and extruded into sheet-shaped dried rubber (width 300 mm × thickness 30 mm). Next, after cooling to 50°C or less, the bales were cut to a predetermined length of 650 mm, and 10 bales were stacked to obtain hydrogenated nitrile rubber bales L to R. When the bulk density was measured, the hydrogenated nitrile rubber bales L to R from which the internal air had been removed using a screw-type extruder all had a bulk density of 0.85 g/cm$^3$ or more, which was much higher than the bulk density of the hydrogenated nitrile rubber bales A to G from Examples 1 to 7, which were compressed at 3 MPa using the baler, which was 0.7 to 0.75.

The hydrogenated nitrile rubber bales L to R thus produced were used to prepare positive electrode binders L to R in the same manner as in Examples 1 to 7, and performance evaluation was performed. Although the evaluation level was not changed, the performance of each of the bales was significantly higher than the results of Examples 1 to 7. In particular, all of the conductive material dispersion stability evaluations were originally rated "A", but when hydrogenated nitrile rubber bales L to R, which have a high bulk density (almost no air inside), were used, the viscosity change rate $\Delta\eta$ hardly changed at all, reaching a value of nearly 100%. In addition, when the evaluation was performed on an average of five times, the results were good with little variation. This is presumably because hydrogenated nitrile rubber bales L to R have little air inside and are less likely to generate oxygen radicals, which contributed to the stability of the conductive material dispersion. Incidentally, when crumb-like hydrogenated nitrile rubber was obtained by directly drying the water-containing crumb before it was put into the screw-type extruder, the bulk density was 0.5 to 0.6 g/cm$^3$.

The screw-type extruder used in Examples 8 to 14 was composed of one supply barrel, three dehydration barrels (first to third dehydration barrels), five drying barrels (first to fifth drying barrels), and a die section, and the operating conditions of the screw-type extruder were as follows:

Temperature setting for each barrel:

- 1st to 3rd dehydration barrels: 90 to 120°C
- 1st to 5th drying barrels: 120 to 180°C

Operating conditions:

- Diameter (D) of screw in barrel unit: 104 mm
- Total length (L) of screw in barrel unit: 4620 mm
- L/D: 44
- Rotational speed of screw in barrel unit: 220 rpm
- Residence time: 100 seconds
- Decompression degree of drying barrel: 10 kPa
- Resin pressure at die: 2 MPa

The characteristic values of the hydrogenated nitrile rubber bales L to R produced above were significantly improved in bulk density of the bales compared to the hydrogenated nitrile rubber bales A to G produced in Examples 1 to 7, but the molecular weight, iodine value, antiaging agent content, various metal contents, and chlorine content of the constituent hydrogenated nitrile rubber were unchanged.

[Industrial Applicability]

According to the present invention, it is possible to provide a hydrogenated nitrile rubber and a manufacturing method thereof, which can improve the viscosity characteristics and stability of a conductive material dispersion, prevent cracking of the active material of an electrode, and improve the output characteristics of an electrochemical element.

According to the present invention, it is possible to provide a hydrogenated nitrile rubber bale, which can improve the viscosity characteristics and stability of a conductive material dispersion, prevent cracking of the active material of an electrode, and improve the output characteristics of an electrochemical element.

According to the present invention, it is possible to provide a positive electrode binder, which can improve the viscosity characteristics and stability of a conductive material dispersion, prevent cracking of the active material of an electrode, and improve the cycle characteristics and output characteristics of an electrochemical element.

According to the present invention, it is possible to provide a positive electrode for an electrochemical element, which has less cracking of the electrode active material and excellent output characteristics, and a manufacturing method thereof.

**Claims**

1. Hydrogenated nitrile rubber containing nitrile group-containing monomer units and conjugated diene monomer units and/or alkylene structural units, having a weight average molecular weight (Mw) in the range of 1,000 to 1,000,000 and an iodine value of 100 mg/100 mg or less, containing a phenol-based antiaging agent, and having a calcium (Ca) content of 1 to 2500 ppm, a ruthenium (Ru) content of 0.5 to 50 ppm, a palladium (Pd) content of 200 ppm or less, a magnesium (Mg) content of 50 ppm or less, and a sodium (Na) content of 300 ppm or less.

2. The hydrogenated nitrile rubber according to claim 1, in which the calcium (Ca) content is in the range of 10 to 1500 ppm.

3. The hydrogenated nitrile rubber according to claim 1, in which the content of the phenol-based antiaging agent is in the range of 0.001 to 2 mass%.

4. The hydrogenated nitrile rubber according to claim 1, in which the bulk density is 0.8 g/cm$^3$ or more.

5. The hydrogenated nitrile rubber according to claim 4, in which the total ratio of the nitrile group-containing monomer units and the conjugated diene monomer units and/or alkylene structural units in the hydrogenated nitrile rubber is 95 mass% or more.

6. The hydrogenated nitrile rubber according to claim 4, in which the chlorine (Cl) content is 3000 ppm or less, and the mass ratio (Ca/Cl) of the calcium (Ca) content to the chlorine (Cl) content is in the range of 0.01 to 10.

7. The hydrogenated nitrile rubber according to claim 4, in which the ratio (Mw/Mn) of the weight average molecular weight (Mw) to the number average molecular weight (Mn) of the hydrogenated nitrile rubber is in the range of 1.2 to 5, and the ratio (Mz/Mw) of the Z average molecular weight (Mz) to the weight average molecular weight (Mw) of the hydrogenated nitrile rubber is in the range of 1.5 to 5.

8. The hydrogenated nitrile rubber according to claim 4, in which the weight average molecular weight (NMP-Mw) measured using NMP as a solvent and the weight average molecular weight (DMF-Mw) measured using DMF as a solvent satisfy the relationship NMP-Mw $\geqq$ DMF-Mw.

9. The hydrogenated nitrile rubber according to claim 1, which is obtained by emulsion polymerizing a nitrile group-containing monomer and a conjugated diene monomer, coagulating the resulting polymer with calcium chloride, and hydrogenating the polymer.

10. The hydrogenated nitrile rubber according to claim 1, which is obtained by emulsion-polymerizing a nitrile group-containing monomer and a conjugated diene monomer, adding a phenol-based antiaging agent to the resulting polymer, and coagulating the polymer with calcium chloride, and hydrogenating the polymer.

11. A method for producing the hydrogenated nitrile rubber according to claim 1, which comprises emulsion-polymerizing a monomer component containing a nitrile group-containing monomer and a conjugated diene monomer, adding a phenol-based antiaging agent to the resulting polymer, and coagulating the polymer with calcium chloride, and hydrogenating the polymer by any of the following methods (1) to (3):

   (1) A hydrogenation reaction is carried out using a ruthenium-based catalyst;
   (2) A metathesis reaction with a co-olefin is carried out using a ruthenium-based catalyst, followed by a hydrogenation reaction;
   (3) A metathesis reaction with a co-olefin is carried out using a ruthenium-based catalyst, followed by a hydrogenation reaction using a hydrogenation catalyst other than the ruthenium-based catalyst.

12. The method for producing the hydrogenated nitrile rubber according to claim 11, in which the hydrogenated nitrile rubber produced after the hydrogenation reaction is dried by a screw-type extruder.

13. The method for producing the hydrogenated nitrile rubber according to claim 12, in which the screw-type extruder is equipped with a drying barrel under reduced pressure.

14. A hydrogenated nitrile rubber bale obtained by baling the hydrogenated nitrile rubber according to claim 1.

**15.** The hydrogenated nitrile rubber bale according to claim 14, which has a bulk density of 0.8 g/cm$^3$ or more.

**16.** The hydrogenated nitrile rubber bale according to claim 14, in which the baling is performed by stacking sheet-like hydrogenated nitrile rubber.

**17.** A positive electrode material using the hydrogenated nitrile rubber according to claim 1.

**18.** A positive electrode binder obtained by dispersing or dissolving the hydrogenated nitrile rubber according to claim 1 in N-methylpyrrolidone (NMP).

**19.** A positive electrode comprising a positive electrode mixture layer containing a conductive material, a positive electrode active material, and the positive electrode material according to claim 17, and a current collector.

**20.** A method for producing a positive electrode comprising the steps of mixing the positive electrode binder according to claim 18 with a conductive material, and then mixing the resultant with a positive electrode active material to obtain a positive electrode mixture layer slurry, coating the slurry on a current collector, and drying the slurry.

**21.** A positive electrode material using the hydrogenated nitrile rubber bale according to claim 14.

**22.** A positive electrode binder obtained by dispersing or dissolving the hydrogenated nitrile rubber bale according to claim 14 in N-methylpyrrolidone (NMP).

**23.** A positive electrode comprising a positive electrode mixture layer comprising a conductive material, a positive electrode active material, and the positive electrode material according to claim 21, and a current collector.

**24.** A method for producing a positive electrode comprising the steps of mixing the positive electrode binder according to claim 22 with a conductive material, and then mixing the resultant with a positive electrode active material to obtain a positive electrode mixture layer slurry, coating the slurry on a current collector, and drying the slurry.

## INTERNATIONAL SEARCH REPORT

International application No.

**PCT/JP2024/031278**

### A. CLASSIFICATION OF SUBJECT MATTER

*C08F 8/04*(2006.01)i; *C08K 3/08*(2006.01)i; *C08K 5/13*(2006.01)i; *C08L 15/00*(2006.01)i; *H01M 4/62*(2006.01)i; *H01M 4/139*(2010.01)i
FI: C08F8/04; H01M4/139; H01M4/62 Z; C08K3/08; C08K5/13; C08L15/00

According to International Patent Classification (IPC) or to both national classification and IPC

### B. FIELDS SEARCHED

Minimum documentation searched (classification system followed by classification symbols)

C08F6/00-246/00; 301/00; C08L1/00-101/14; C08K3/00-13/08; H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-143251 A (ZEON CORPORATION) 10 September 2020 (2020-09-10) entire text | 1-24 |
| A | WO 2022/045267 A1 (ZEON CORPORATION) 03 March 2022 (2022-03-03) entire text | 1-24 |
| A | WO 2016/103730 A1 (ZEON CORPORATION) 30 June 2016 (2016-06-30) entire text | 1-24 |
| A | JP 2018-145434 A (ARLANXEO DEUTSCHLAND G.M.B.H.) 20 September 2018 (2018-09-20) entire text | 1-24 |
| A | JP 2022-536304 A (LG CHEM, LTD.) 15 August 2022 (2022-08-15) entire text | 1-24 |

☑ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 November 2024** | **19 November 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

| International application No. |
| --- |
| **PCT/JP2024/031278** |

### C. DOCUMENTS CONSIDERED TO BE RELEVANT

| Category* | Citation of document, with indication, where appropriate, of the relevant passages | Relevant to claim No. |
| --- | --- | --- |
| A | JP 03-207757 A (JAPAN SYNTHETIC RUBBER CO., LTD.) 11 September 1991 (1991-09-11)<br>entire text | 1-24 |

Form PCT/ISA/210 (second sheet) (July 2022)

## INTERNATIONAL SEARCH REPORT
### Information on patent family members

International application No.

**PCT/JP2024/031278**

| Patent document cited in search report | | | Publication date (day/month/year) | Patent family member(s) | | Publication date (day/month/year) |
|---|---|---|---|---|---|---|
| JP | 2020-143251 | A | 10 September 2020 | (Family: none) | | |
| WO | 2022/045267 | A1 | 03 March 2022 | JP 2022-41227 | A | |
| | | | | US 2023/0299298 | A1 | |
| | | | | entire text | | |
| | | | | JP 6870769 | B1 | |
| | | | | EP 4207364 | A1 | |
| | | | | KR 10-2022-0132665 | A | |
| | | | | CN 116114080 | A | |
| | | | | KR 10-2023-0127365 | A | |
| WO | 2016/103730 | A1 | 30 June 2016 | US 2017/0352915 | A1 | |
| | | | | entire text | | |
| | | | | EP 3240069 | A1 | |
| | | | | EP 3800714 | A1 | |
| | | | | KR 10-2017-0070863 | A | |
| | | | | CN 107004861 | A | |
| | | | | KR 10-2018-0004337 | A | |
| JP | 2018-145434 | A | 20 September 2018 | JP 2017-504696 | A | |
| | | | | US 2016/0376421 | A1 | |
| | | | | entire text | | |
| | | | | WO 2015/101599 | A1 | |
| | | | | EP 3090019 | A1 | |
| | | | | TW 201546096 | A | |
| | | | | KR 10-2016-0105833 | A | |
| | | | | CN 105992797 | A | |
| JP | 2022-536304 | A | 15 August 2022 | US 2022/0384812 | A1 | |
| | | | | entire text | | |
| | | | | WO 2021/141376 | A1 | |
| | | | | EP 3978564 | A1 | |
| | | | | KR 10-2021-0089093 | A | |
| | | | | CN 114174384 | A | |
| JP | 03-207757 | A | 11 September 1991 | (Family: none) | | |

Form PCT/ISA/210 (patent family annex) (July 2022)

**EP 4 772 543 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018160421 A
- JP 6911985 B
- JP 2018145434 A
- WO 2007049651 A
- JP 2009179686 A
- JP 4509792 B
- JP 6309634 B
- JP 2012204303 A